(19)

Europäisches
Patentamt
European
Patent Office
Office européen
des brevets

(11) **EP 4 209 902 A1**

(12) **EUROPEAN PATENT APPLICATION**
published in accordance with Art. 153(4) EPC

(43) Date of publication:
**12.07.2023 Bulletin 2023/28**

(21) Application number: **21874324.3**

(22) Date of filing: **23.09.2021**

(51) International Patent Classification (IPC):
**G06F 9/50** (2006.01)

(52) Cooperative Patent Classification (CPC):
**G06F 9/50; G06N 3/04**

(86) International application number:
**PCT/CN2021/119829**

(87) International publication number:
**WO 2022/068663 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.09.2020 CN 202011057095**

(71) Applicant: **Huawei Technologies Co., Ltd.
Shenzhen, Guangdong 518129 (CN)**

(72) Inventors:
• ZHANG, Zhen
  Shenzhen, Guangdong 518129 (CN)
• LAMPROU, Ioannis
  Shenzhen, Guangdong 518129 (CN)
• DE JUAN, Javier
  Shenzhen, Guangdong 518129 (CN)
• LIU, Chang
  Shenzhen, Guangdong 518129 (CN)

(74) Representative: **Körber, Martin Hans
Mitscherlich PartmbB
Patent- und Rechtsanwälte
Sonnenstraße 33
80331 München (DE)**

(54) **MEMORY ALLOCATION METHOD, RELATED DEVICE, AND COMPUTER READABLE STORAGE MEDIUM**

(57)    This application provides a memory allocation method, a related device, and a computer-readable storage medium. The method includes: obtaining a computation graph corresponding to a neural network; sequentially allocating memory space to M pieces of tensor data based on a sorting result of the M pieces of tensor data, where if at least a part of the allocated memory space can be reused for one of the M pieces of tensor data, the at least the part of the memory space that can be reused for the tensor data is allocated to the tensor data, the allocated memory space is memory space that has been allocated to the M pieces of tensor data before the tensor data, the sorting result indicates a sequence of allocating memory space to the M pieces of tensor data, and the sorting result is related to information about each of the M pieces of tensor data. In this application, improper memory allocation can be avoided.

```
                                                          S401
  Obtain a computation graph corresponding to a neural network

                            │
                            ▼
                                                          S402
  Sequentially allocate memory space to M pieces of tensor data based on a
           sorting result of the M pieces of tensor data
```

FIG. 4a

EP 4 209 902 A1

**Description**

This application claims priority to Chinese Patent Application No. 202011057095.2, filed with the China National Intellectual Property Administration on September 29, 2020 and entitled "MEMORY ALLOCATION METHOD, RELATED DEVICE, AND COMPUTER-READABLE STORAGE MEDIUM", which is incorporated herein by reference in its entirety.

**TECHNICAL FIELD**

This application relates to the field of artificial intelligence technologies, and in particular, to a memory allocation method, a related device, and a computer-readable storage medium.

**BACKGROUND**

In the current computer deep learning field, a deep learning neural network grows increasingly complex to achieve higher algorithm precision. However, a hardware capability hinders in-depth development of the neural network, and memory needs to be optimized. To optimize the memory, the following memory allocation policies are usually used in the industry.

An entire neural network is run, and then memory is allocated to the entire neural network based on a sequence of running of the entire neural network. For example, in a running process, the neural network needs to sequentially occupy 100 M memory space, 10 M memory space, and 50 M memory space. When the neural network applies for 100 M memory space, 100 M memory space may be allocated to the neural network. Then, when the neural network applies for 10 M memory space, it is determined whether the allocated 10 M memory space can be reused; and if the allocated 10 M memory space can be reused, no new memory space is allocated to the applied 10 M memory space, and the foregoing 100 M memory space is reused. Similarly, when the neural network applies for 50 M memory space, it is first determined whether allocated 100 M memory space can be reused for the 50 M memory space; and if the allocated 100 M memory space can be reused, no new memory space is allocated to the applied 50 M memory space.

It can be learned from the foregoing descriptions that, in the conventional technology, when a neural network applies for memory space, whether allocated memory space can be reused for the applied memory space first needs to be determined; and if the allocated memory space can be reused, the applied memory space is directly allocated to reuse the allocated memory space, or if the allocated memory space cannot be reused, new memory space is allocated to the memory space. However, if the allocated 100 M memory space can be reused for both the applied 10 M memory space and the applied 50 M memory space, the allocated 100 M memory space is reused for the applied 10 M memory space, and additional 50 M memory space is allocated to the neural network. Therefore, the entire neural network needs to occupy 150 M memory space. As a result, memory occupied by the entire neural network is large, and memory allocation is improper.

**SUMMARY**

This application provides a memory allocation method, a related device, and a computer-readable storage medium, to avoid improper memory allocation. For example, the improper memory allocation may be reflected in that memory occupied by an entire neural network is large.

According to a first aspect, a memory allocation method is provided. The method may include the following steps: first obtaining a computation graph corresponding to a neural network, where the computation graph includes N nodes and a directed edge that connects different nodes, the node is used to indicate computation logic in the neural network, and the directed edge is used to indicate a direction of tensor data in the computation logic; and a directed edge of the computation graph carries tensor data, the computation graph includes M pieces of tensor data, and M is an integer greater than 1; and then sequentially allocating memory space to the M pieces of tensor data based on a sorting result of the M pieces of tensor data, where if at least a part of the allocated memory space can be reused for one of the M pieces of tensor data, the at least the part of the memory space that can be reused for the tensor data is allocated to the tensor data, where the allocated memory space is memory space that has been allocated to the M pieces of tensor data before the tensor data, the sorting result indicates a sequence of allocating memory space to the M pieces of tensor data, the sorting result is related to information about each of the M pieces of tensor data, the information about each piece of tensor data indicates at least one of the following information: a constraint relationship corresponding to each piece of tensor data and a quantity of nodes to which each piece of tensor data flows, and the constraint relationship indicates a relationship between available memory space of one of the M pieces of tensor data and available memory space of other tensor data in the M pieces of tensor data. In the memory space that has been allocated to the M pieces of tensor data, the M pieces of tensor data are used as a whole, and the memory space that has been allocated to the whole is described. Some tensor data in the whole may not be allocated to the memory space.

Specifically, this means that before the memory space is allocated to the tensor data described in the foregoing method, if memory space of one or more pieces of tensor data in memory space has been allocated to the M pieces of tensor data, for example, if memory space is allocated to an $m^{th}$ piece of tensor data in the sorting result in sequence, the memory space that has been allocated to the M pieces of tensor data is memory space allocated to first m-1 pieces of tensor data that have been allocated, where m is less than M and greater than 1.

Certainly, for a first tensor in the sorting result, because there is no memory space allocated to the M pieces of tensor data, the memory space only needs to be directly allocated. This is the conventional technology. Details are not described.

Generally, a node to which tensor data flows is the consumption node, and a node from which tensor data flows is the production node.

It should be noted that one piece of tensor data may be carried on different directed edges, or one piece of tensor data may be carried on one directed edge.

Compared with the conventional technology in which memory space is allocated and reused in a sequence of running of an entire neural network, in this embodiment of this application in which the memory allocation apparatus sequentially allocates memory space of a corresponding size to all pieces of tensor data based on the sorting result of the M pieces of tensor data, so that a phenomenon of improper memory allocation can be avoided, thereby saving memory that needs to be occupied by the entire neural network, and optimizing memory allocation of the neural network.

In a possible implementation, the method may further include the following step: if the allocated memory space cannot be reused for the tensor data, allocating other memory space to the tensor data, where the other memory space is different from the allocated memory space.

In a possible implementation, the constraint relationship indicates at least one of the following relationships: a relationship between available memory space of one piece of tensor data and available memory space of another piece of tensor data is reusable, a relationship between available memory space of one piece of tensor data and available memory space of another piece of tensor data is non-reusable, and a relationship between available memory space of one piece of tensor data and available memory space of another piece of tensor data is non-reusable and continuous. In actual application, the constraint relationship has different priorities. To be specific, when a relationship between available memory space of two tensors is non-reusable and continuous, the relationship is also definitely non-reusable. In this case, the relationship between the available memory space of the two tensors is indicated as non-reusable and continuous in the constraint relationship. That is, it may be understood that a non-reusable and continuous priority is higher than a non-reusable priority.

In a possible implementation, the constraint relationship is carried in a constraint relationship table, the constraint relationship table includes identifiers of the M data tensors, and in the constraint relationship table, a first value is used to indicate that the relationship between the available memory space of the one piece of tensor data and the available memory space of the another piece of tensor data is reusable, a second value is used to indicate that the relationship between the available memory space of the one piece of tensor data and the available memory space of the another piece of tensor data is non-reusable, and a third value is used to indicate that the relationship between the available memory space of the one piece of tensor data and the available memory space of the another piece of tensor data is non-reusable and continuous. Specifically, the first value, the second value, and the third value may be values that can be distinguished from each other. For example, the first value may be "0", the second value may be "1", and the third value may be "2". With reference to the foregoing descriptions, in an implementation, if a relationship is non-reusable and continuous, the relationship in the constraint relationship table is marked only as "2" instead of "1" and "2". In this implementation, it is convenient to subsequently obtain the sorting result of the M pieces of tensor data with reference to the constraint relationship. Further, when memory space of a corresponding size is sequentially allocated to the tensor data based on the sorting result, a phenomenon of improper memory can be avoided.

In some possible implementations, when all consumption nodes of first tensor data are upstream nodes of a production node of second tensor data, or when all consumption nodes of the second tensor data are downstream nodes of a production node of the first tensor data, memory space allocated to the second tensor data can be reused for the first tensor data; or when all the consumption nodes of the first tensor data are not the upstream nodes of the production node of the second tensor data, or when all the consumption nodes of the second tensor data are not the downstream nodes of the production node of the first tensor data, the memory space allocated to the second tensor data cannot be reused for the first tensor data, where the first tensor data and the second tensor data are any two of the M pieces of tensor data, the consumption node is a node to which tensor data flows, and the production node is a node from which tensor data flows. Specifically, that a node A is an upstream node of a node B means that in the computation graph, the node A and the node B may be connected through one or more directed edges, that is, the node A and the node B may be connected through a directed edge from the node A to the node B, or may be connected through a plurality of directed edges and nodes included in these directed edges. In this implementation, the constraint relationship corresponding to each piece of tensor data may be determined, to provide a basis for subsequently obtaining the sorting result of the M pieces of tensor data. When memory space of a corresponding size is sequentially allocated to the tensor data based on the sorting result, a phenomenon of improper memory can be avoided.

In a possible implementation, the computation graph includes a plurality of computing subtasks, the computing subtask indicates a computing function by using a group of nodes and an edge related to the group of nodes, and an execution relationship between the plurality of computing subtasks is parallel. The method may further include the following steps: in one computing subtask, if there is no directed edge between two adjacent nodes, adding a directed edge between the two adjacent nodes, to update the computing graph, where each added directed edge carries corresponding tensor data, and the two adjacent nodes are two nodes that are adjacent in an execution sequence in the computing subtask; and herein, the execution sequence is a sequence having a time sequence relationship; and obtaining the information about each piece of tensor data based on the updated computation graph. In this embodiment of this application, when all execution relationships between the computing subtasks are parallel, in one computing subtask in the computation graph, if there is no directed edge between two adjacent nodes, a directed edge is added between the two adjacent nodes, to update the computation graph, so as to provide a basis for subsequently analyzing an ancestor relationship (for example, an upstream node) of each node based on the computation graph and determining a constraint relationship corresponding to each node. It should be noted that, that the execution relationship between the plurality of computing subtasks is parallel means that time periods required for executing the plurality of computing subtasks overlap at a same time reference. It is not emphasized that the computing subtasks start at a same time point and/or end at a same time point. In actual application, the foregoing computing subtasks having a parallel execution relationship may be executed in parallel by using different processor cores.

In a possible implementation, the computation graph further includes a first computing subtask and a second computing subtask that are in a serial execution relationship, and the first computing subtask is before the second computing subtask in an execution sequence. An implementation process of updating the computation graph may further include the following step: if there is no directed edge between a last node in the first computing subtask and a first node in the second computing subtask, adding a directed edge between the last node in the first computing subtask and the first node in the second computing subtask. When the execution relationship between the computing subtasks includes serial and parallel, the computation graph may be updated in this implementation, to provide a basis for subsequently analyzing an ancestor relationship of each node based on the computation graph and determining a constraint relationship corresponding to each node. For example, that an execution relationship between a computing subtask 1 and a computing subtask is serial means that a processor executes the computing subtask 2 only after completing execution of the computing subtask. For another example, that an execution relationship between a computing subtask 1 and a computing subtask 2 is serial, and an execution relationship between the computing subtask 2 and a computing subtask 3 is parallel means that the computing subtask 1 and the computing subtask 2 may be considered as a whole, the computing subtask 1 and the computing subtask 2 are run by using a processor core 1, and the computing subtask 3 is run by using a processor core 2. Time periods required by the processor core 1 and the processor core 2 to execute the foregoing computing subtasks overlap at a same time reference.

In a possible implementation, in the computation graph, an identifier of a production node of tensor data is less than an identifier of a consumption node of the tensor data, and the production node of the tensor data and the consumption node of the tensor data are two adjacent nodes. In this implementation, an identifier corresponding to each node may be determined, to provide a basis for subsequently analyzing an ancestor relationship of each node based on the identifier corresponding to each node and determining a constraint relationship corresponding to each node.

In a possible implementation, an identifier of each node in the computation graph is used to determine the information about each of the M pieces of tensor data. For example, the information about each piece of tensor data indicates a constraint relationship corresponding to each piece of tensor data. An ancestor relationship of each node may be analyzed based on an identifier of each node (which nodes are production nodes and which nodes are consumption nodes may be reflected in the ancestor relationship), and then the constraint relationship corresponding to each piece of tensor data is obtained based on the ancestor relationship.

In a possible implementation, the information about each piece of tensor data indicates the constraint relationship corresponding to each piece of tensor data. The method may further include the following steps: obtaining, based on the constraint relationship corresponding to each piece of tensor data, constraint quantities respectively corresponding to the M pieces of tensor data, where the constraint quantity is an amount of tensor data that is in other tensor data and for which same memory space cannot be reused with the tensor data; and sorting the M pieces of tensor data based on the constraint quantities respectively corresponding to the M pieces of tensor data, to obtain the sorting result of the M pieces of tensor data.

In a possible implementation, the information about each piece of tensor data indicates a quantity of nodes to which each piece of tensor data flows. The method further includes: sorting the M pieces of tensor data based on quantities of consumption nodes that respectively correspond to the M pieces of tensor data, to obtain the sorting result of the M pieces of tensor data.

It should be noted that, in some possible implementations, the M pieces of tensor data may be further sorted in descending order based on at least two of the information about each piece of tensor data, to obtain the sorting result of the M pieces of tensor data. For example, the M pieces of tensor data are sorted in descending order based on the constraint quantities respectively corresponding to the M pieces of tensor data and a size of memory space corresponding to each piece of tensor data, to obtain the sorting result of the M pieces of tensor data. For another example, the M pieces of tensor data are sorted in descending order based on the constraint quantities respectively corresponding to the M pieces of tensor data and the quantities of consumption nodes that respectively correspond to all the pieces of tensor data, to obtain the sorting result of the M pieces of tensor data.

In some possible implementations, the method may further include the following step: sorting the M pieces of tensor data based on the information about each piece of tensor data by using a heuristic algorithm, to obtain the sorting result of the M pieces of tensor data within a preset time period. In a possible implementation, the sorting result is a sorting result obtained after optimization, and a size of maximum memory that needs to be occupied by the neural network and that corresponds to the sorting result obtained after optimization is less than a size of maximum memory that needs to be occupied by the neural network and that is determined based on a sorting result existing before optimization. In this implementation, memory space can be saved because the size of the maximum memory that needs to be occupied by the neural network and that is determined based on the sorting result obtained after optimization is less than the size of the maximum memory that needs to be occupied by the neural network and that is determined based on the sorting result.

According to a second aspect, an embodiment of this application further provides a memory allocation method. The method may include the following steps: first obtaining a computation graph corresponding to a neural network, where the computation graph includes N nodes and a directed edge that connects different nodes, the node is used to indicate computation logic in the neural network, and the directed edge is used to indicate a direction of tensor data in the computation logic; and a directed edge of the computation graph carries tensor data, the computation graph includes M pieces of tensor data, and M is an integer greater than 1; and then sequentially allocating memory space to the M pieces of tensor data based on a constraint relationship corresponding to each piece of tensor data and an execution sequence of the M pieces of tensor data in the neural network, where if at least a part of the allocated memory space can be reused for one of the M pieces of tensor data, the at least the part of the memory space that can be reused for the tensor data is allocated to the tensor data, where the allocated memory space is memory space that has been allocated to the M pieces of tensor data before the tensor data, and the constraint relationship indicates a relationship between available memory space of one of the M pieces of tensor data and available memory space of other tensor data in the M pieces of tensor data. In this embodiment of this application, a terminal device may sequentially allocate the memory space to the M pieces of tensor data based on the constraint relationship corresponding to each piece of tensor data and the execution sequence of the M pieces of tensor data. This can avoid a case in which in a parallel scenario, an operator operation result is incorrect because operators reuse same memory space in different execution flows, and can ensure accuracy of a calculation result of the neural network.

In a possible implementation, the method may further include the following step: if the allocated memory space cannot be reused for the tensor data, allocating other memory space to the tensor data, where the other memory space is different from the allocated memory space.

In general, the method provided in this application can resolve a problem of improper memory allocation, for example, improper memory allocation may be reflected in that excessively large memory is allocated to the neural network, and in a parallel scenario, an operator operation result is incorrect because operators reuse same memory space in different execution flows, and can ensure accuracy of a calculation result of the neural network.

According to a third aspect, an embodiment of this application provides a memory allocation apparatus. The apparatus may include: a computation graph obtaining unit, configured to obtain a computation graph corresponding to a neural network, where the computation graph includes N nodes and a directed edge that connects different nodes, a directed edge of the computation graph carries tensor data, the computation graph includes M pieces of tensor data, and M is an integer greater than 1; and an allocation unit, configured to sequentially allocate memory space to the M pieces of tensor data based on a sorting result of the M pieces of tensor data, where if at least a part of the allocated memory space can be reused for one of the M pieces of tensor data, the at least the part of the memory space that can be reused for the tensor data is allocated to the tensor data, where the allocated memory space is memory space that has been allocated to the M pieces of tensor data before the tensor data, the sorting result indicates a sequence of allocating memory space to the M pieces of tensor data, the sorting result is related to information about each of the M pieces of tensor data, the information about each piece of tensor data indicates at least one of the following information: a constraint relationship corresponding to each piece of tensor data and a quantity of nodes to which each piece of tensor data flows, and the constraint relationship indicates a relationship between available memory space of one of the M pieces of tensor data and available memory space of other tensor data in the M pieces of tensor data.

In a possible implementation, the allocation unit is further configured to: if the allocated memory space cannot be reused for the tensor data, allocate other memory space to the tensor data, where the other memory space is different from the allocated memory space.

In a possible implementation, the constraint relationship indicates at least one of the following relationships: a relationship between available memory space of one piece of tensor data and available memory space of another piece of tensor data is reusable, a relationship between available memory space of one piece of tensor data and available memory space of another piece of tensor data is non-reusable, and a relationship between available memory space of one piece of tensor data and available memory space of another piece of tensor data is non-reusable and continuous.

In a possible implementation, the constraint relationship is carried in a constraint relationship table, the constraint relationship table includes identifiers of the M data tensors, and in the constraint relationship table, a first value is used to indicate that the relationship between the available memory space of the one piece of tensor data and the available memory space of the another piece of tensor data is reusable, a second value is used to indicate that the relationship between the available memory space of the one piece of tensor data and the available memory space of the another piece of tensor data is non-reusable, and a third value is used to indicate that the relationship between the available memory space of the one piece of tensor data and the available memory space of the another piece of tensor data is non-reusable and continuous.

In a possible implementation, when all consumption nodes of first tensor data are upstream nodes of a production node of second tensor data, or when all consumption nodes of the second tensor data are downstream nodes of a production node of the first tensor data, memory space allocated to the second tensor data can be reused for the first tensor data; or when all the consumption nodes of the first tensor data are not the upstream nodes of the production node of the second tensor data, or when all the consumption nodes of the second tensor data are not the downstream nodes of the production node of the first tensor data, the memory space allocated to the second tensor data cannot be reused for the first tensor data, where the first tensor data and the second tensor data are any two of the M pieces of tensor data, the consumption node is a node to which tensor data flows, and the production node is a node from which tensor data flows.

In a possible implementation, the computation graph includes a plurality of computing subtasks, the computing subtask indicates a computing function by using a group of nodes and an edge related to the group of nodes, and an execution relationship between the plurality of computing subtasks is parallel. The apparatus further includes: a computation graph updating unit, configured to: in one computing subtask, if there is no directed edge between two adjacent nodes, add a directed edge between the two adjacent nodes, to update the computing graph, where each added directed edge carries corresponding tensor data, and the two adjacent nodes are two nodes that are adjacent in an execution sequence in the computing subtask; and an information obtaining unit, configured to obtain information about each piece of tensor data based on the updated computed graph.

In a possible implementation, the computation graph further includes a first computing subtask and a second computing subtask that are in a serial execution relationship, and the first computing subtask is before the second computing subtask in an execution sequence. The computation graph updating unit is further configured to: if there is no directed edge between a last node in the first computing subtask and a first node in the second computing subtask, add a directed edge between the last node in the first computing subtask and the first node in the second computing subtask.

In a possible implementation, in the computation graph, an identifier of a production node of tensor data is less than an identifier of a consumption node of the tensor data, and the production node of the tensor data and the consumption node of the tensor data are two adjacent nodes.

In a possible implementation, an identifier of each node in the computation graph is used to determine the information about each of the M pieces of tensor data.

In a possible implementation, the information about each piece of tensor data indicates the constraint relationship corresponding to each piece of tensor data. The apparatus further includes a first sorting unit, configured to: obtain, based on the constraint relationship corresponding to each piece of tensor data, constraint quantities respectively corresponding to the M pieces of tensor data, where the constraint quantity is an amount of tensor data that is in other tensor data and for which same memory space cannot be reused with the tensor data; and sort the M pieces of tensor data based on the constraint quantities respectively corresponding to the M pieces of tensor data, to obtain the sorting result of the M pieces of tensor data.

In a possible implementation, the information about each piece of tensor data indicates a quantity of nodes to which each piece of tensor data flows. The apparatus further includes a second sorting unit, configured to sort the M pieces of tensor data based on quantities of consumption nodes that respectively correspond to the M pieces of tensor data, to obtain the sorting result of the M pieces of tensor data.

In a possible implementation, the apparatus further includes:
a third sorting unit, configured to sort the M pieces of tensor data based on the information about each piece of tensor data by using a heuristic algorithm, to obtain the sorting result of the M pieces of tensor data within a preset time period.

In a possible implementation, the sorting result is a sorting result obtained after optimization, and a size of maximum memory that needs to be occupied by the neural network and that corresponds to the sorting result obtained after optimization is less than a size of maximum memory that needs to be occupied by the neural network and that is determined based on a sorting result existing before optimization.

According to a fourth aspect, an embodiment of this application further provides a memory allocation apparatus. The apparatus may include: a computation graph obtaining unit, configured to obtain a computation graph corresponding to a neural network, where the computation graph includes N nodes and a directed edge that connects different nodes, a directed edge of the computation graph carries tensor data, the computation graph includes M pieces of tensor data, and M is an integer greater than 1; and an allocation unit, configured to sequentially allocate memory space to the M pieces of tensor data based on a constraint relationship corresponding to each piece of tensor data and an execution sequence of the M pieces of tensor data in the neural network, where if at least a part of the allocated memory space can be reused for one of the M pieces of tensor data, the at least the part of the memory space that can be reused for the tensor data is allocated to the tensor data, where the allocated memory space is memory space that has been allocated to the M pieces of tensor data before the tensor data, and the constraint relationship indicates a relationship between available memory space of one of the M pieces of tensor data and available memory space of other tensor data in the M pieces of tensor data.

In a possible implementation, the allocation unit is further configured to: if the allocated memory space cannot be reused for the tensor data, allocate other memory space to the tensor data, where the other memory space is different from the allocated memory space.

According to a fifth aspect, an embodiment of this application further provides a memory allocation device. The memory allocation device may include a memory and a processor. The memory is configured to store a computer program that supports the memory allocation device in performing the foregoing method, the computer program includes program instructions, and the processor is configured to invoke the program instructions to perform the memory allocation method according to any implementation of the first aspect or any implementation of the second aspect.

According to a sixth aspect, an embodiment of this application further provides a computer readable storage medium. The computer storage medium stores a computer program, the computer program includes program instructions, and when the program instructions are executed by a processor, the processor is enabled to perform the memory allocation method according to any implementation of the first aspect or any implementation of the second aspect.

According to a seventh aspect, an embodiment of this application further provides a computer program. The computer program includes computer software instructions, and when the computer software instructions are executed by a computer, the computer is enabled to perform the memory allocation method according to any implementation of the first aspect or any implementation of the second aspect

## BRIEF DESCRIPTION OF DRAWINGS

FIG. 1a is a schematic diagram of a structure of a computation graph of a neural network according to an embodiment of this application;
FIG. 1b is a schematic diagram of a structure of another computation graph of a neural network according to an embodiment of this application;
FIG. 1c is a schematic diagram of an execution sequence of operators in a computation graph according to an embodiment of this application;
FIG. 1d is a schematic diagram of an execution sequence of operators in a computation graph according to an embodiment of this application;
FIG. 2a is a schematic diagram of a computation graph of a neural network and an execution sequence of operators in the computation graph according to an embodiment of this application;
FIG. 2b is a schematic diagram of allocating memory space to tensor data according to an embodiment of this application;
FIG. 2c is a schematic diagram of a computation graph of a neural network in a parallel scenario and an execution sequence of operators in the computation graph according to an embodiment of this application;
FIG. 3a is a schematic diagram of a structure of a memory allocation device according to an embodiment of this application;
FIG. 3b is a schematic diagram of an architecture of a server side or a terminal device side according to an embodiment of this application;
FIG. 3c is a schematic diagram of a network architecture according to an embodiment of this application;
FIG. 3d is a schematic diagram of a directed acyclic graph DAG according to an embodiment of this application;
FIG. 4a is a schematic flowchart of a memory allocation method according to an embodiment of this application;
FIG. 4b is a schematic diagram of a structure of a convolutional neural network 400 according to an embodiment of this application;
FIG. 4c is a schematic diagram of determining a sorting result according to an embodiment of this application;
FIG. 4d is a schematic diagram of memory space in an allocated set according to an embodiment of this application;

FIG. 4e is a schematic diagram of an updated computation graph according to an embodiment of this application;
FIG. 4f is a schematic diagram of memory space in an allocated set according to an embodiment of this application;
FIG. 4g is a schematic diagram of memory space in an allocated set according to an embodiment of this application;
FIG. 5 is a schematic flowchart of another memory allocation method according to an embodiment of this application;
FIG. 6 is a schematic diagram of a structure of a memory allocation apparatus 60 according to an embodiment of this application; and
FIG. 7 is a schematic diagram of a structure of a memory allocation device 70 according to an embodiment of this application.

## DESCRIPTION OF EMBODIMENTS

The following clearly and completely describes technical solutions in embodiments of this application with reference to accompanying drawings. It is clear that the described embodiments are merely some but not all embodiments of this application.

In the specification and accompanying drawings of this application, the terms "first", "second", and the like are intended to distinguish between different objects or distinguish between different processing of a same object, but do not indicate a particular order of the objects. In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes other inherent steps or units of the process, the method, the product, or the device. It should be noted that, in embodiments of this application, the term such as "example" or "for example" is used to represent giving an example, an illustration, or descriptions. Any embodiment or design method described as an "example" or "for example" in embodiments of this application should not be explained as being more preferred or having more advantages than another embodiment or design scheme. Exactly, use of the word "example", "for example", or the like is intended to present a relative concept in a specific manner. In embodiments of this application, "A and/or B" represents two meanings: A and B, and A or B. "A, and/or B, and/or C" represents any one of A, B, and C, or represents any two of A, B, and C, or represents A, B, and C.

To better understand the technical solutions described in this application, the following first explains related technical terms in embodiments of this application.

(1) Neural network

The neural network may include a neuron. The neuron may be an operation unit that uses $x_s$ and an intercept of b as an input, where an output of the operation unit may be as follows:

$$h_{w,b}(x) = f(w^T x) = f\left(\sum_{s=1}^{n} w_s x_s + b\right)$$

$$(1\text{-}1)$$

s=1, 2, ..., and n, n is a natural number greater than 1, $w_s$ is a weight of $x_s$, b is a bias of the neuron, and f is an activation function (activation function) of the neuron, used to introduce a nonlinear feature into the neural network, to convert an input signal in the neuron into an output signal. The output signal of the activation function may be used as an input of a next convolution layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

(2) Deep neural network

The deep neural network (deep neural network, DNN) is also referred to as a multi-layer neural network, and may be understood as a neural network having a plurality of hidden layers. There is no special metric for "a plurality of" herein. The DNN is divided based on locations of different layers, and a neural network in the DNN may be divided into three types: an input layer, a hidden layer, and an output layer. Generally, a first layer is the input layer, a last layer is the output layer, and a middle layer is the hidden layer. The layers may be fully connected or may not be fully connected. When the layers are fully connected, any neuron at an $i^{th}$ layer is definitely connected to any neuron at an $(i+1)^{th}$ layer. Although the DNN seems to be complex, work of each layer is not complex, and is simply the following linear relationship expression: $\vec{y} = \alpha(w\vec{x} + b)$, where $\vec{x}$ is an input vector, $\vec{y}$ is an output vector, $b$ is an offset vector, $W$ is a weight matrix (also referred to as a coefficient), and $\alpha(\ )$ is an activation function. Each layer simply performs such a simple operation on the input vector $\vec{x}$ to obtain the output vector $\vec{y}$. Because a quantity of DNN layers is large, a quantity of coefficients $w$ and a quantity of offset vectors b are also large. These parameters are defined in the DNN as follows: The coefficient $W$ is used as an example. It is assumed that in a three-layer DNN, a linear coefficient from a fourth neuron at a second layer to a second neuron at a third layer is defined as $w_{24}^{3}$. The superscript 3 represents a layer at which the coefficient W is located, and the subscript corresponds to an output third-layer index 2 and an input second-layer index 4.

In summary, a coefficient from a $k^{th}$ neuron at an $(L-1)^{th}$ layer to a $j^{th}$ neuron at an $L^{th}$ layer is defined as $w_{jk}^{L}$. It should be noted that the input layer does not have the parameter $w$. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors $w$ at many layers).

(3) Computation graph

In this application, the computation graph is a manner of describing a computation process of a neural network by using a graph structure. If computation is significantly modular and there are temporal and logical dependency relationships between modules definitely, a directed graph structure may be usually used for description. In actual application, the graph structure includes two basic elements, which are respectively a node and a directed edge. A neural network model may be abstracted as a directed graph structure including tensor data and operators. The node is also referred to as an operator, the directed edge is an edge with a direction, describes a pointing direction between operators, and is used to represent a dependency relationship between the operators. In this application, for ease of description, the node is used as an example for description.

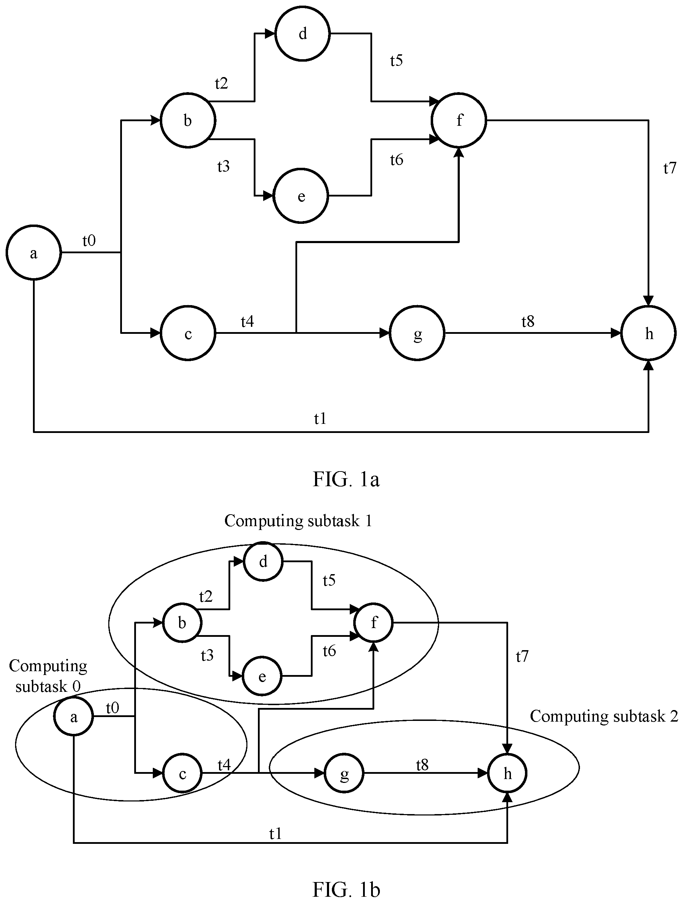

As shown in FIG. 1a, a computation graph includes eight operators and nine pieces of tensor data. Specifically, the eight operators are respectively an operator a, an operator b, an operator c, an operator d, an operator e, an operator f, an operator g, and an operator h, and the nine pieces of tensor data are respectively tensor data t0, tensor data t1, tensor data t2, tensor data t3, tensor data t4, tensor data t5, tensor data t6, tensor data t7, and tensor data t8. The operator a, the operator b, and the operator c are used as an example. For the operator a, there is a directed edge between the operator a and the operator b, a pointing direction of the directed edge is that the operator a points to the operator b, and the directed edge indicates that the tensor data t0 generated by the operator a is an input of the operator b. In addition, there is a directed edge between the operator a and the operator c, a pointing direction of the directed edge is that the operator a points to the operator c, and the directed edge indicates that the tensor data t0 generated by the operator a is an input of the operator b.

Generally, a neural network model is described by using a computation graph, to help grasp computing tasks in an entire neural network as a whole. In addition, an expression manner of the computation graph is also convenient for scheduling and parallel execution of the computing tasks.

In this application, operators in the computation graph may be allocated to a plurality of computing subtasks, and different computing subtasks may be parallel or serial. Operators in a same computing subtask run in serial. For example, as shown in FIG. 1b, an operator a and an operator c are allocated to a computing subtask 0, an operator b, an operator d, an operator e, and an operator f are allocated to a computing subtask 1, and an operator g and an operator h are allocated to a computing subtask 2. For how to determine a quantity of computing subtasks in the computation graph, refer to an existing implementation. This is not limited herein. For example, a computing task in a neural network may be split to obtain a plurality of computing subtasks, so that a plurality of computing subgraphs can be obtained, where one computing subgraph is one computing subtask.

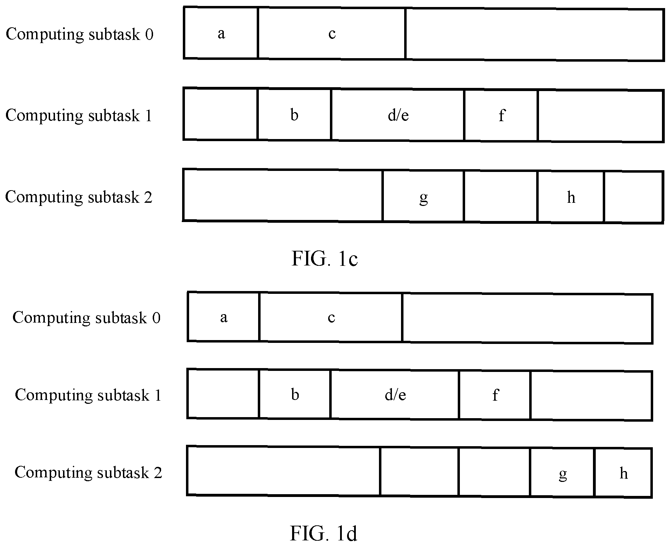

In some embodiments, when the computing subtask 0, the computing subtask 1, and the computing subtask 2 are in a parallel state, an execution sequence of operators in different computing subtasks depends on a direction of a directed edge between the operators. For example, in the computing subtask 0, an execution sequence of the operators is: the operator a -> the operator c; in the computing subtask 1, an execution sequence of the operators is: the operator b -> the operator d/the operator e -> the operator f; and in the computing subtask 2, an execution sequence of the operators is: the operator g -> the operator h. In FIG. 1b, the operator c and the operator g are executed in parallel in the two computing subtasks. Because tensor data t4 generated by the operator c is an input of the operator g, the operator g is executed only after running of the operator c ends. The operator e and the operator g are executed in parallel in the two computing subtasks. For the operator e, tensor data t6 generated by the operator e is not an input of the operator g; and for the operator g, tensor data t8 generated by the operator g is not an input of the operator e, that is, there is no generation or consumption of tensor data between the operator e and the operator g. Therefore, an execution sequence of the operator e and the operator g is not limited. Specifically, an execution sequence of operators in the computation graph may be shown in FIG. 1c. It should be noted that, in FIG. 1c, an execution sequence of an operator d and an operator e is not limited. Based on this, the execution sequence is represented as the operator d/the operator e.

In some embodiments, when the computing subtask 0 and the computing subtask 1 are in a parallel state, and the computing subtask 1 and the computing subtask 2 are in a serial state, an execution sequence of operators in different computing subtasks depends on a direction of a directed edge between the operators. For example, in the computing subtask 0, an execution sequence of the operators is: the operator a -> the operator c; in the computing subtask 1, an execution sequence of the operators is: the operator b -> the operator d/the operator e -> the operator f; and in the computing subtask 2, an execution sequence of the operators is: the operator g -> the operator h. For the computing subtask 1 and the computing subtask 2, the operator g in the computing subtask 2 is run only after running of the operator f in the computing subtask 1 ends. Specifically, an execution sequence of operators in the computation graph may be shown in FIG. 1d.

4. Dependency relationship

In this application, an operator A depends on an operator B, indicating that the operator A needs to wait until execution of a kernel function corresponding to the operator B is completed before the a computing task of the operator A starts.

(5) Tensor

In this application, the tensor is merely feature description of stored data, and the tensor records information such as a shape and a type of the data.

In this application, the tensor needs to be understood as tensor data, and may include input tensor data and output tensor data in a neural network model, or may include feature tensor data, or the like.

An artificial intelligence deep learning framework TensorFlow is used as an example. A tensor dimension is usually described by using a rank (rank), a shape (shape), and a dimension number (dimension number). A relationship between the rank, the shape, and the dimension number may be shown in the following table.

| Rank | Shape | Dimension number | Example |
|------|-------|------------------|---------|
| 0 | [] | 0-D | 4 |
| 1 | [D1] | 1-D | [2] |
| 2 | [D1, D2] | 2-D | [6, 2] |
| 3 | [D1, D2, D3] | 3-D | [7, 3, 2] |
| ... | ... | ... | |
| n | [D1, D2, D3, ..., Dn] | n-D | Tensor with a shape of [D1, D2, D3, ..., Dn] |

As shown in the foregoing table, if Tensor A=4, the tensor A represents a number.

As shown in the foregoing table, if Tensor A=[6, 2], the tensor A represents a two-dimensional matrix. Specifically, the matrix is a matrix with six rows and two columns.

(6) Allocated set

In this application, the allocated set is a set of allocated memory space information in a process of storing tensor data in a neural network. The allocated set may also be referred to as a shared memory queue. This is not specifically limited in this application.

(7) Memory allocation policy of a neural network

A first policy is referred to as an In-Place policy. The policy means that an input and an output of each node in the neural network share one piece of memory space.

A second policy is referred to as a Co-share policy. The policy means that memory space can be used by a plurality of nodes in the neural network. When execution of all the nodes is completed, a lifecycle of the memory space ends. In this case, the memory space can be used by another node in the neural network. For example, a lifecycle of memory space A may be preset to (1, 2, 3), indicating that the memory space A can be used by a node 1, a node 2, and a node 3. When execution of the node 1, the node 2, and the node 3 is completed, the lifecycle of the memory space A ends. In this case, the memory space A may be placed in a free linked list for use by another node in the neural network.

Currently, for the foregoing second policy, a specific memory allocation method is as follows: Memory space is allocated and reused in an execution sequence of nodes in the neural network, and therefore a memory allocation effect is poor.

For example, in a running process, the neural network needs to sequentially occupy 100 M memory space, 10 M memory space, and 50 M memory space. When the neural network applies for 100 M memory space, 100 M memory space may be allocated to the neural network. Then, when the neural network applies for 10 M memory space, it is determined whether the allocated 10 M memory space can be reused; and if the allocated 10 M memory space can be reused, no new memory space is allocated to the applied 10 M memory space, and the foregoing 100 M memory space is reused. Similarly, when the neural network applies for 50 M memory space, it is first determined whether allocated 100 M memory space can be reused for the 50 M memory space; and if the allocated 100 M memory space can be reused, no new memory space is allocated to the applied 50 M memory space. However, if the allocated 100 M memory space can be reused for both the applied 10 M memory space and the applied 50 M memory space, the allocated 100 M memory space is reused for the applied 10 M memory space, and additional 50 M memory space is allocated to the neural network. Therefore, the entire neural network needs to occupy 150 M memory space. As a result, memory occupied by the entire neural network is large, and memory allocation is improper.

For the foregoing descriptions, this application provides a memory allocation method. A main principle of the method is: obtaining a sorting result of a plurality of pieces of tensor data in an entire neural network based on information about each piece of tensor data, where the information about each piece of tensor data may include at least one of a size of memory space that needs to be occupied by each piece of tensor data, a constraint relationship corresponding to each piece of tensor data, and a consumption operator, and each piece of tensor data includes a corresponding identifier; and then sequentially allocating memory space to the tensor data based on the sorting result. In the foregoing method, improper memory planning space in the conventional technology can be avoided, so that memory that needs to be occupied in the entire neural network can be saved, and memory allocation of the neural network is optimized. In addition, the method can further resolve a problem that in a parallel scenario, an operator operation result is incorrect because operators reuse same memory space in different computing subtasks.

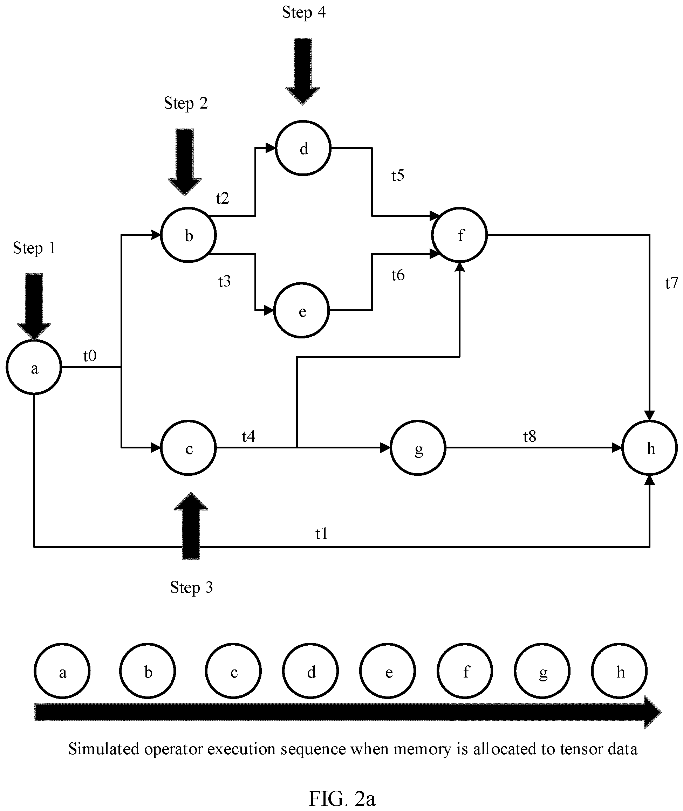

For another example, as shown in FIG. 2a, an entire neural network includes eight nodes, and indexes are respectively a to h in a running sequence. It can be learned through pre-analysis that when the neural network shown in FIG. 1a runs, five pieces of memory space need to be occupied successively in an execution sequence {a, b, c, d, e, f, g, h} of operators, which are respectively first memory space, second memory space, third memory space, fourth memory space, and fifth memory space, and each piece of memory space is used for tensor data.

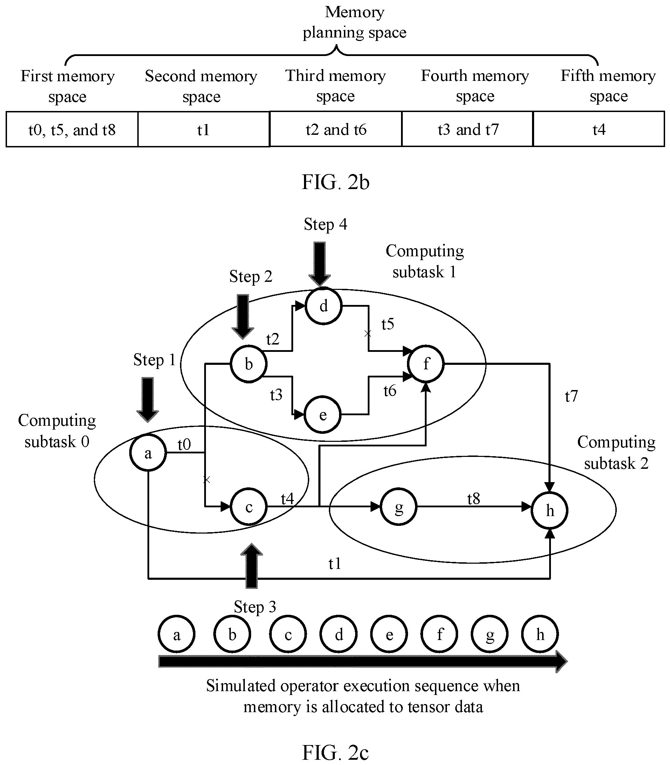

Specifically, an implementation process of pre-allocating memory to the tensor data may be shown in FIG. 2b. Before execution of operation logic of an operator a is simulated, the first memory space is allocated to tensor data t0, and the second memory space is allocated to tensor data t1. Before execution of operation logic of an operator b is simulated, the third memory space is allocated to tensor data t2, and the fourth memory space is allocated to tensor data t3. Before execution of operation logic of an operator c is simulated, the fifth memory space is allocated to tensor data t4. In addition, the first memory space is released, and the first memory space can be reused for subsequent tensor data. Before execution of operation logic of an operator d is simulated, the first memory space that can be reused is allocated to tensor data t5. In addition, the third memory space is released, and the third memory space can be reused for subsequent tensor data. Before execution of operation logic of an operator e is simulated, the third memory space that can be reused is allocated to tensor data t6. In addition, the fourth memory space is released, and the fourth memory space can be reused for subsequent tensor data. Before execution of operation logic of an operator f is simulated, the fourth memory space that can be reused is allocated to tensor data t7. In addition, the first memory space and the third memory space are released, and the first memory space and the third memory space can be reused for subsequent tensor data. Before execution of operation logic of an operator g is simulated, the first memory space that can be reused is allocated to tensor data t8. In addition, the fifth memory space is released. Before execution of operation logic of an operator h is simulated, the second memory space, the fourth memory space, and the first memory space are released. In addition, an operation result of the neural network is stored in specified memory space.

As shown in FIG. 2b, a size of memory planning space determined for an entire neural network is a sum of sizes of the foregoing five pieces of memory space.

In the computation graph shown in FIG. 1b, the computation graph includes three computing subtasks, and the three computing subtasks respectively represent different neural network computing subtasks. Generally, a relationship between the three computing subtasks may be serial or parallel. In a same computing subtask, an execution sequence of operators is serial. As shown in FIG. 2c, when a relationship between a computing subtask 0 and a computing subtask 1 is parallel (for example, the foregoing two computing subtasks may be run by using different processor cores), because an execution sequence of an operator c and an operator d is in a parallel relationship, if an operation of the operator c is not completed when an operation of the operator d is performed, if same memory space (the first memory space) is reused for tensor data t0 and tensor data t5, the tensor data t0 generated by an operator a is overwritten, and an operation result of the operator c is incorrect. It may be understood that, in the conventional technology, when parallel computing subtasks exist in a computation graph, the memory planning space shown in FIG. 2b is improper. The improper memory planning space is reflected in that in two parallel computing subtasks, an operation result of one of operators is incorrect because operators in different computing subtasks reuse same memory space.

For the foregoing descriptions, this application provides another memory allocation method. A main principle of the method is as follows: In a parallel scenario, a constraint relationship corresponding to each piece of tensor data in a computation graph is determined, and then memory space is allocated to tensor data based on the constraint relationship corresponding to each piece of tensor data. In the foregoing method, improper memory planning space in the conventional technology can be avoided, a case in which an operator operation result is incorrect because operators reuse same memory space in different computing subtasks can be avoided, and accuracy of a calculation result of the neural network can be ensured.

To better understand this application, the following describes several application scenarios to which the method described in this application may be applied.

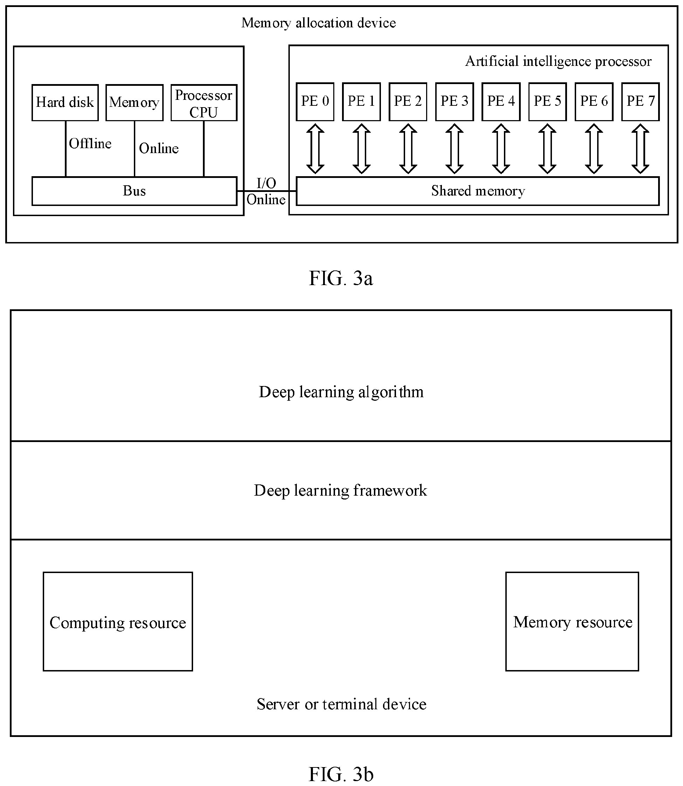

As shown in FIG. 3a, the method described in this application may be applied to neural network online training/inference, or may be applied to neural network offline training/inference. Specifically, in the neural network online/inference scenario, a processor CPU communicates with an artificial intelligence processor through an I/O bus, to allocate memory to a neural network in a running state. In a neural network offline/inference scenario, a general-purpose processor obtains a neural network offline file stored in a hard disk, and allocates memory to the neural network offline file when invoking the neural network offline file.

In this application, the memory allocation device may be specifically a server or a terminal device. As shown in FIG. 3b, a server side or a terminal device side may include a deep learning algorithm, a deep learning framework, a computing resource, a memory resource, and the like. The deep learning algorithm may invoke a computing resource and a memory resource by using a deep learning framework.

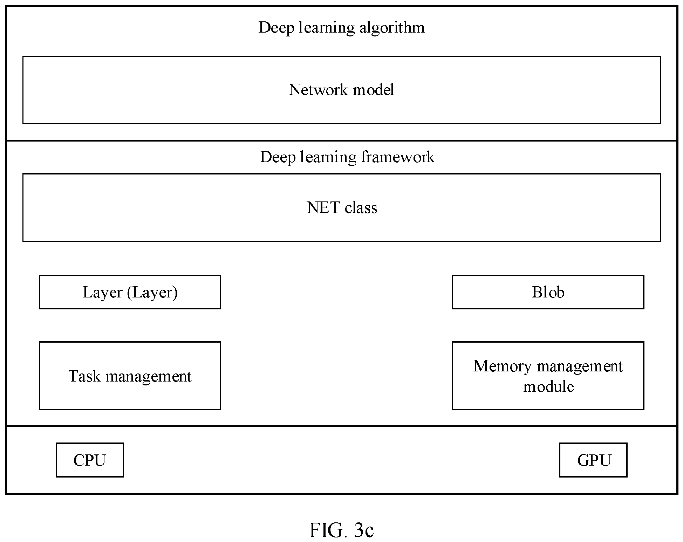

A convolutional architecture for fast feature embedding (Convolutional Architecture For Fast Feature embedding, Caffe) is used as an example. Caffe may support a plurality of types of deep learning frameworks, image-oriented classification, and image-oriented segmentation, and may further support a convolutional neural network (Convolutional Neural Network, CNN), a convolutional neural network (Region-CNN, RCNN) used for target detection, a long short-term memory (Long Short-Term Memory, LSTM) neural network, and a fully connected neural network. As shown in FIG. 3c, a deep learning algorithm may include a network model, and a deep learning framework may include a NET class, a layer, a blob, a task management module, and a memory management module (syncmem), where a MemModel module may be disposed in the memory management module. Memory optimization can be implemented based on original logic of the blob and the memory management module.

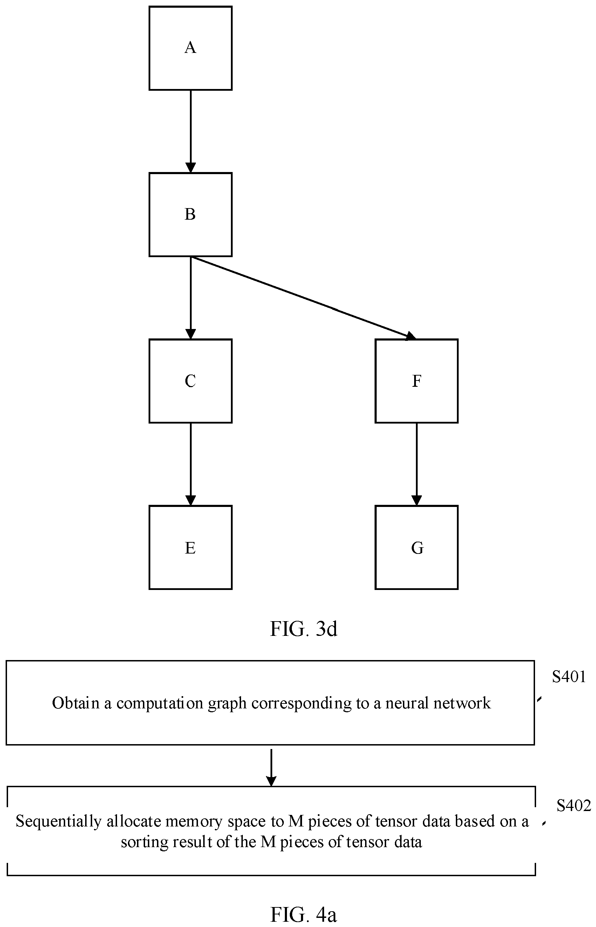

In this embodiment of this application, the network model may be specifically a network model of a neural network. The NET class may store a directed acyclic graph (Directed acyclic graph, DAG) corresponding to a neural network. For example, as shown in FIG. 3d, an example of a DAG is provided. In the example in FIG. 3d, a neural network includes five nodes A, B, C, E, F, and G, where an output parameter (for example, tensor data) of the node A is used as an input parameter of the node B, an output parameter of the node B is used as an input parameter of the node C and the node F, an output parameter of the node C is used as an input parameter of the node E, and output parameters of the node E and the node F are used as an input parameter of the node G. The layer is configured to store information about a node included in the neural network. The node may also be referred to as a layer. The blob is configured to store information about memory space occupied by an input parameter, an output parameter, and an intermediate parameter that correspond to each node during operation of the node in the neural network. The memory management module is configured to: manage and allocate information about memory space occupied by the neural network.

FIG. 4a is a schematic flowchart of a neural network memory allocation method according to an embodiment of this application. The method may be performed by a server on which a neural network is run, or may be performed by a terminal device on which a neural network is run. For ease of description, an example in which an execution body is a terminal device on which a neural network is run is used for description. In the schematic flowchart of the method shown in FIG. 4a, it may be specified that a plurality of pieces of memory space are required when the entire neural network is run. As shown in FIG. 4a, the method may include but is not limited to the following steps.

Step S401: Obtain a computation graph corresponding to a neural network, where the computation graph includes N nodes and a directed edge that connects different nodes, a directed edge of the computation graph carries tensor data, the computation graph includes M pieces of tensor data, and M is an integer greater than 1.

In this embodiment of this application, the node is configured to indicate computation logic in the neural network, that is, a function for implementing a specific function. In actual application, an OP may be used to represent a node, and a tensor may be used to represent tensor data.

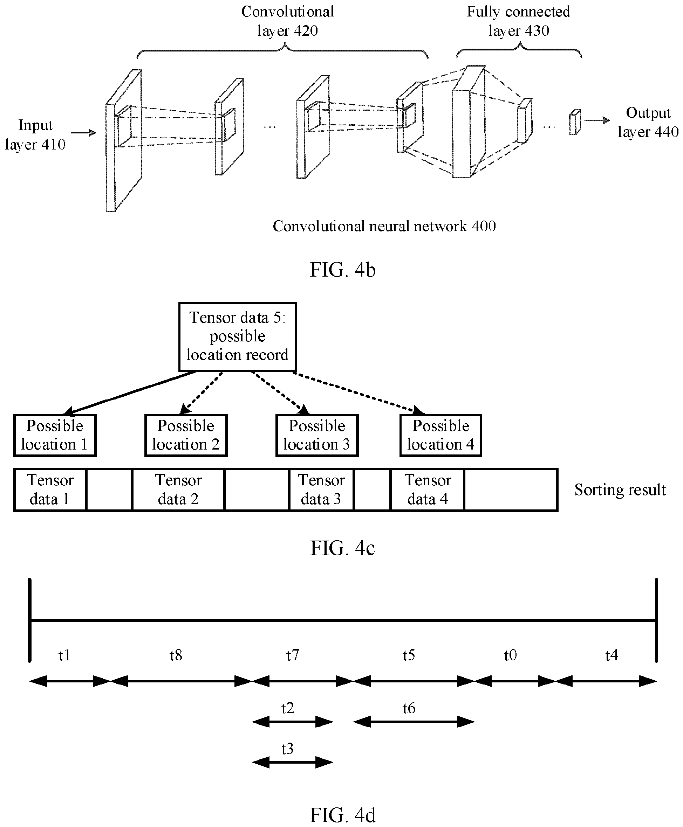

For example, the neural network is a convolutional neural network. A specific structure of the convolutional neural network may be shown in FIG. 4b. The convolutional neural network (CNN) 400 may include an input layer 410, a convolutional layer/pooling layer 420 (where the pooling layer is optional), a fully connected layer 430, and an output layer 440. Herein, the fully connected layer 430 refers to a fully connected network structure. A hidden layer 1 is used as an example. A product of input data of the hidden layer 1 and a weight tensor corresponding to the hidden layer 1 may be used to represent a fully connected feature. For example, the fully connected feature may be quantized as $\omega x$ , where $\omega$ represents the weight tensor corresponding to the hidden layer 1, and x represents the input data of the hidden layer 1. Specifically, the convolutional layer 420 is configured to extract a feature of input data. For example, when the input data is an image, the convolution layer 420 is configured to extract a feature of the input image, to reduce a quantity of parameters brought by the input image. The fully connected layer 430 is configured to integrate class-differentiated local information in the convolutional layer 420 (or the pooling layer). For example, the fully connected layer 430 may connect a feature extracted by the convolutional layer 420. In actual application, to improve network performance of the convolutional neural network 400, an excitation function of each neuron at the fully connected layer 430 is usually a ReLU function. An output value of the last fully connected layer 430 is transferred to an output. For example, classification may be performed through softmax logistic regression (softmax regression), so that a processing result can be obtained. For example, the processing result may be a recognition probability of an image, so that the processing result can be output through the output layer 440.

A terminal device may obtain a computation graph corresponding to the convolutional neural network. The computation graph includes a convolution node, a fully connected (FC) node, an activation (Relu) node, a pooling (Pooling) node, a classifier (softmax) node, and the like.

In this embodiment of this application, a directed edge may be used to represent a connection relationship between nodes, the directed edge carries tensor data, and a direction of the directed edge is used to reflect a direction of the tensor data.

Step S402: Sequentially allocate memory space to the M pieces of tensor data based on a sorting result of the M pieces of tensor data, where if at least a part of the allocated memory space can be reused for one of the M pieces of tensor data, at least the part of the memory space that can be reused for the tensor data is allocated to the tensor data, where the allocated memory space is memory space that has been allocated to the M pieces of tensor data before the tensor data.

In this embodiment of this application, the sorting result of the M pieces of tensor data indicates an execution sequence of allocating memory space to the M pieces of tensor data, the sorting result is related to information about each of the M pieces of tensor data, and the information about each piece of tensor data indicates at least one of the following information: a constraint relationship corresponding to each piece of tensor data and a quantity of nodes to which each piece of tensor data flows.

In this application, the tensor data may include input tensor data, output tensor data, and intermediate tensor data.

In this application, the consumption node is a node that consumes tensor data in the computation graph, that is, a node to which tensor data flows. "Consumption" refers to use and consumption of a substance (for example, tensor data) in a node operation process.

In this application, the production node is a node that generates tensor data in the computation graph, that is, a node from which tensor data flows. "Production" is a reverse process of "consumption", indicating an output in a node operation process.

In this application, that a node A is an upstream node of a node B means that there may be at least one path from the node A to the node B in the computation graph. For example, in the computation graph, the node B may be used as a start point, and the upstream node corresponding to the node B is obtained through reverse traversal (that is, in an opposite direction of the directed edge).

In this application, the constraint relationship may be carried in a constraint relationship table. In the constraint relationship table, a first value may be used to indicate that same memory space can be reused for each piece of tensor data with another piece of tensor data, a second value may be used to indicate that same memory space cannot be reused for each piece of tensor data with another piece of tensor data, and a third value may be used to indicate that each piece of tensor data and another piece of tensor data may be continuously stored in same memory space.

Specifically, the first value, the second value, and the third value may be values that can be distinguished from each other. For example, the first value may be "0", the second value may be "1", and the third value may be "2".

In some embodiments, the constraint relationship has different priorities. To be specific, when a relationship between available memory space of two tensors is non-reusable and continuous, the relationship is also definitely non-reusable. In this case, the relationship between the available memory space of the two tensors is indicated as non-reusable and continuous in the constraint relationship. That is, it may be understood that a non-reusable and continuous priority is higher than a non-reusable priority.

It should be noted that, in some embodiments, the constraint relationship may alternatively be not limited to a representation form of the constraint relationship table, or may be presented in another data structure.

In some embodiments, an implementation process of determining a constraint relationship corresponding to each piece of tensor data in the computation graph may include: determining whether all consumption nodes of first tensor data are upstream nodes of a production node of second tensor data; and if all the consumption nodes of the first tensor data are the upstream nodes of the production node of the second tensor data, determining that memory space allocated to the second tensor data can be reused for the first tensor data, or if all the consumption nodes of the first tensor data are not the upstream nodes of the production node of the second tensor data, determining that memory space allocated to the second tensor data cannot be reused for the first tensor data.

In some embodiments, an implementation process of determining a constraint relationship corresponding to each piece of tensor data in the computation graph may include: determining whether all consumption nodes of second tensor data are downstream nodes of a production node of first tensor data; and if all the consumption nodes of the second tensor data are the downstream nodes of the production node of the first tensor data, determining that memory space allocated to the second tensor data can be reused for the first tensor data, or if all the consumption nodes of the second tensor data are not the downstream nodes of the production node of the first tensor data, determining that memory space allocated to the second tensor data cannot be reused for the first tensor data.

In this application, that at least a part of memory space allocated to tensor data B can be reused for tensor data A means that the memory space allocated to the tensor data B can be completely reused for the tensor data A, or the part of the memory space allocated to the tensor data B can be reused for the tensor data A.

In this application, that a node A is an upstream node of a node B means that there may be at least one path from the node A to the node B in the computation graph. For example, in the computation graph, the node B may be used as a start point, and the upstream node corresponding to the node B is obtained through reverse traversal (that is, in an opposite direction of the directed edge).

In some embodiments, an implementation process of determining a size of memory space that needs to be occupied by each piece of tensor data in the computation graph may include: A terminal device runs a neural network, and records the size of the memory space that needs to be occupied by each piece of tensor data in the neural network, so that the size of the memory space that needs to be occupied by each piece of tensor data when the neural network is in a running state is determined based on the recorded size of the memory space that needs to be occupied by each piece of tensor data, to provide a basis for subsequently allocating corresponding memory space to the tensor data. For example, the entire neural network includes a node 1 and a node 2. The terminal device runs the neural network by using an artificial intelligence processor, and may record, in a running process of the neural network, a size 1000 KB of memory space that needs to be occupied by tensor data 1, and a size 500 KB of memory space that needs to be occupied by tensor data 2, so that the size of the memory space that needs to be occupied by each piece of tensor data when the neural network is in the running state can be determined based on the recorded size of the memory space that needs to be occupied by each piece of tensor data.

In addition, it should be noted that, in this application, it is considered by default that each piece of tensor data has an identifier corresponding to the tensor data. The computation graph shown in FIG. 1b is used as an example. The computation graph includes eight operators and nine piece of tensor data. The nine piece of tensor data may be represented as tensor data t0, tensor data t1, tensor data t2, tensor data t3, tensor data t4, tensor data t5, tensor data t6, tensor data t7, and tensor data t8. It may be understood that an identifier corresponding to each piece of tensor data is unique.

In some embodiments, the identifier may be a series of sequential numbers, so that a sequence of tensor data can be determined based on the identifier corresponding to each piece of tensor data.

In some embodiments, constraint quantities respectively corresponding to the M pieces of tensor data may be obtained based on the constraint relationship corresponding to each piece of tensor data, where the constraint quantity is an amount of tensor data that is in other tensor data and for which same memory space cannot be reused with the tensor data; and then the M pieces of tensor data are sorted in descending order based on the constraint quantities respectively corresponding to the M pieces of tensor data, to obtain the sorting result of the M pieces of tensor data.

In some embodiments, the M pieces of tensor data may be sorted in descending order based on a quantity of consumption nodes that respectively correspond to the M pieces of tensor data, to obtain the sorting result of the M pieces of tensor data.

It may be understood that the M pieces of tensor data may be further sorted in descending order based on at least two of the information about each piece of tensor data, to obtain the sorting result of the M pieces of tensor data. For example, the information about each piece of tensor data includes a size of memory space that needs to be occupied by each piece of tensor data and a constraint relationship corresponding to each piece of tensor data. The computation graph includes two pieces of tensor data: tensor data 1 and tensor data 2. A size of memory space that needs to be occupied by the tensor data 1 is 1000 KB, a constraint relationship between the tensor data 1 and the tensor data 2 is that same memory space cannot be reused for the tensor 1 with the tensor data 2, and a constraint quantity of the tensor data 1 is 1. A size of memory space that needs to be occupied by the tensor data 1 is 500 KB, a constraint relationship between the tensor data 2 and the tensor data 1 is that same memory space cannot be reused for the tensor data 2 with the tensor data 1, and a constraint quantity of the tensor data 2 is 1. The foregoing two pieces of tensor data are sorted in descending order, to obtain a sorting result: the tensor data 1 and the tensor data 2.

In some embodiments, the M pieces of tensor data may be sorted by using a heuristic algorithm, to obtain the sorting result of the M pieces of tensor data within a preset time period. Herein, the heuristic algorithm is an algorithm constructed based on intuitive or empirical, and provides a feasible solution of each instance of a to-be-resolved combination optimization problem at acceptable costs (computing time and space). Generally, a degree of deviation between the feasible solution and the optimal solution cannot be predicted.

As described above, in addition to the identifier corresponding to each piece of tensor data, the information about each piece of tensor data may further include one or more of the following: a size of memory space that needs to be occupied by each piece of tensor data, a constraint relationship corresponding to each piece of tensor data, and a quantity of consumption nodes to which each piece of tensor data flows. When sorting the M pieces of tensor data by using the heuristic algorithm, the terminal device needs to consider a sequence of information included in each piece of tensor data, and then uses the sequence as an independent individual for sorting. For example, there may be 632 mixed sorting results of the four pieces of information when the information about each piece of tensor data includes the identifier corresponding to each piece of tensor data, the size of the memory space that needs to be occupied by each piece of tensor data, the constraint relationship corresponding to each piece of tensor data, and the quantity of consumption nodes to which each piece of tensor data flows.

For example, the computation graph includes four pieces of tensor data: tensor data 1, tensor data 2, tensor data 3, tensor data 4, and tensor data 5. The terminal device sorts the five pieces of tensor data by using the foregoing heuristic algorithm, and learns that a sorting sequence (for example, the sorting sequence is the tensor data 2, the tensor data 3, the tensor data 4, the tensor data 1, and the tensor data 5) determined by using the heuristic algorithm within a preset time period is a sorting result of the five pieces of tensor data. Therefore, the terminal device may allocate memory space to the tensor data based on the determined sorting result.

In some embodiments, the memory allocation apparatus may invoke a heuristic algorithm (for example, the heuristic algorithm includes a deterministic algorithm and a random algorithm) by using a constraint programming solver CPsolver (Constraint Programming solver) to sort the M pieces of tensor data. It should be noted that the sorting result may be a sorting result that needs to be optimized, or may be a sorting result that does not need to be optimized.

In some embodiments, to save memory, the sorting result is a sorting result obtained after optimization, and a size of maximum memory that needs to be occupied by the neural network and that corresponds to the sorting result obtained after optimization is less than a size of maximum memory that needs to be occupied by the neural network and that is determined based on a sorting result existing before optimization. For example, the computation graph includes four pieces of tensor data: tensor data 1, tensor data 2, tensor data 3, tensor data 4, and tensor data 5. An arrangement sequence of the tensor data 1, the tensor data 2, the tensor data 3, and the tensor data 4 is sequentially as follows: the tensor data 1, the tensor data 2, the tensor data 3, and the tensor data 4. In the sorting result, as shown in FIG. 4c, the tensor data 5 has four possible locations (a possible location 1, a possible location 2, a possible location 3, and a possible location 4), where the possible location 1 is a location between the tensor data 1 and the tensor data 2, the possible location 2 is a location between the tensor data 2 and the tensor data 3, the possible location 3 is a location between the tensor data 3 and the tensor data 4, and the possible location 4 is a location after the tensor data 4. As shown in FIG. 4c, the foregoing four potential possible locations respectively correspond to different memory space. Based on the foregoing potential possible locations, the memory allocation apparatus determines a location of the tensor data 5 based on different determining conditions, where the determining condition may include but is not limited to: for a piece of tensor data, an initial address corresponding to memory space allocated to the tensor data is the smallest or the largest; and for a piece of tensor data, it is determined that a difference between a size of memory space corresponding to a potential possible location and a size of memory space that needs to be occupied by the tensor data meets a threshold. For example, the threshold may be 0 or another value. When the threshold is 0, it indicates that the size of the memory space corresponding to the potential possible location is equal to the size of the memory space that needs to be occupied by the tensor data. When the location of the tensor data 5 in the sorting result is the possible location 1, the terminal device allocates memory space to the tensor data based on the sorting result. For example, the terminal device determines, by using the allocated memory space, that a size of maximum memory required for running the entire neural network is 4500 KB. When the location of the tensor data 5 in the sorting result is the possible location 2, the terminal device allocates memory space to the tensor data based on the sorting result. For example, the terminal device determines, by using the allocated memory space, that a size of maximum memory required for running the entire neural network is 3500 KB. When the location of the tensor data 5 in the sorting result is the possible location 3, the terminal device allocates memory space to the tensor data based on the sorting result. For example, the terminal device determines, by using the allocated memory space, that a size of maximum memory required for running the entire neural network is 5000 KB. When the location of the tensor data 5 in the sorting result is the possible location 4, the terminal device allocates memory space to the tensor data based on the sorting result. For example, the terminal device determines, by using the allocated memory space, that a size of maximum memory required for running the entire neural network is 4000 KB.

The following describes how to allocate memory space to tensor data with reference to a specific example.

In some embodiments, the computation graph shown in FIG. 1b is used as an example. The computing subtask 0 includes a node a and a node c, and an execution sequence of the node a and the node c is: the node a -> the node c. The computing subtask 1 includes a node b, a node d, a node e, and a node f, and an execution sequence of the node b, the node d, the node e, and the node f is: the node b -> the node d/e -> the node f. The computing subtask 2 includes a node g and a node h, and an execution sequence of the node g and the node h is: the node g -> the node h. An execution relationship between the computing subtask 0, the computing subtask 1, and the computing subtask 2 is parallel. In each computing subtask, there is a directed edge between two adjacent nodes. In this case, the computation graph does not need to be adjusted.

Then, in the computation graph, an upstream node corresponding to each node, output tensor data corresponding to each node, and input tensor data corresponding to each node are determined. An example in which a node A is an upstream node of a node B indicates that there may be at least one path from the node A to the node B in the computation graph. Specifically, the upstream node corresponding to each node, the output tensor data corresponding to each node, and the input tensor data corresponding to each node may be shown in Table 1.

**Table 1**

| Node | Upstream node | Output tensor data | Input tensor data |
|------|---------------|--------------------|--------------------|
| a | - | t0 and t1 | - |
| b | a | t2 and t3 | t0 |
| c | a | t4 | t0 |
| d | a and b | t5 | t2 |
| e | a and b | t6 | t3 |
| f | a, b, c, d, and e | t7 | t5, t6, and t4 |
| g | a and c | t8 | t4 |
| h | a, b, c, d, e, f, and g | - | 11, t7, and t8 |

As shown in Table 1, in the computation graph shown in FIG. 1b, the node a is used as an example. The node a is a start node and has no corresponding upstream node. In an operation process of the node a, output tensor data t0 and output tensor data t1 may be obtained. For another example, the node b is used as an example. The node a is an upstream node of the node b. This indicates that there is a path from the node a to the node b in the computation graph. In an operation process of the node b, input tensor data of the node b is t0, and output tensor data t2 and output tensor data t3 may be obtained. Implementation processes of determining an upstream node, output tensor data, and input tensor data that correspond to another node are not described herein again.

Then, a constraint relationship corresponding to each piece of tensor data is determined. For example, it may be determined whether all consumption nodes of first tensor data are upstream nodes of a production node of second tensor data; and if all the consumption nodes of the first tensor data are the upstream nodes of the production node of the second tensor data, it is determined that memory space allocated to the second tensor data can be reused for the first tensor data, or if all the consumption nodes of the first tensor data are not the upstream nodes of the production node of the second tensor data, it is determined that memory space allocated to the second tensor data cannot be reused for the first tensor data. For another example, it may be determined whether all consumption nodes of second tensor data are downstream nodes of a production node of first tensor data; and if all the consumption nodes of the second tensor data are the downstream nodes of the production node of the first tensor data, it is determined that memory space allocated to the second tensor data can be reused for the first tensor data, or if all the consumption nodes of the second tensor data are not the downstream nodes of the production node of the first tensor data, it is determined that memory space allocated to the second tensor data cannot be reused for the first tensor data.

Specifically, the constraint relationship may be carried in a constraint relationship table. In the constraint relationship table, a first value may be used to indicate that same memory space can be reused for each piece of tensor data with another piece of tensor data, a second value may be used to indicate that same memory space cannot be reused for each piece of tensor data with another piece of tensor data, and a third value may be used to indicate that each piece of tensor data and another piece of tensor data may be continuously stored in same memory space. For ease of description, a first value "0" is used to indicate that same memory space can be reused for tensor data with tensor data other than the tensor data, a second value "1" is used to indicate that same memory space cannot be reused for tensor data with tensor data other than the tensor data, and a third value "2" is used to indicate that tensor data and tensor data other than the tensor data may be continuously stored in same memory space. It should be noted that the foregoing description is merely an example, and should not be construed as a limitation. Specifically, the constraint relationship table may be represented as shown in Table 2.

**Table 2**

|    | t0 | t1 | t2 | t3 | t4 | t5 | t6 | t7 | t8 |
|----|----|----|----|----|----|----|----|----|----|
| t0 | -  | 1  | 1  | 1  | 1  | 1  | 1  | 1  | 1  |
| t1 | 1  | -  | 1  | 1  | 1  | 1  | 1  | 1  | 1  |
| t2 | 1  | 1  | -  | 1  | 1  | 1  | 0  | 0  | 1  |
| t3 | 1  | 1  | 0  | -  | 1  | 0  | 1  | 0  | 1  |
| t4 | 1  | 1  | 1  | 1  | -  | 1  | 1  | 1  | 1  |
| t5 | 1  | 1  | 1  | 0  | 1  | -  | 0  | 1  | 1  |
| t6 | 1  | 1  | 0  | 1  | 1  | 0  | -  | 1  | 1  |
| t7 | 1  | 1  | 0  | 0  | 1  | 1  | 1  | 2  | -  |
| t8 | 1  | 2  | 1  | 1  | 1  | 1  | 1  | -  | 1  |

It should be noted that, in a case of considering whether to reuse memory space, constraint relationships between every two pieces of tensor data are symmetric, and the symmetry is reflected in a relationship that is exactly the same as an inverse relationship of the constraint relationship. As shown in Table 2, for example, a constraint relationship between the tensor data t2 and the tensor data t8 is determined. In the computation graph shown in FIG. 1b, a production node of the tensor data t7 is f, and a consumption node of the tensor data t2 is d. Because the consumption node d of the tensor data t2 is an upstream node of the production node f of the tensor data t7, it may be determined that same memory space can be reused for the tensor data t7 with the tensor data t2. In the computation graph shown in FIG. 1b, in the computing subtask 1, the node b is a control selection node, and the node has two branches. One branch is: the node b -> the node d -> the node f. The other branch is: the node b -> the node e -> the node f. In one operation of the neural network, only one branch is valid. For the tensor data t2 and the tensor data t3, a constraint relationship between the tensor data t2 and the tensor data t3 is that the tensor data t2 and the tensor data t3 do not require two pieces of independent memory space, that is, same memory space can be reused. For the tensor data t5 and the tensor data t6, a constraint relationship between the tensor data t5 and the tensor data t6 is that the tensor data t5 and the tensor data t6 do not require two pieces of independent memory space, that is, same memory space can be reused.

It should be further noted that, considering that a plurality of pieces of tensor data are stored in same continuous memory space, constraint relationships between every two pieces of tensor data are asymmetric. In this case, orders between every two pieces of memory space need to be considered.

Then, for example, the information about each piece of tensor data includes a size of memory space that needs to be occupied by each piece of tensor data and a constraint relationship corresponding to each piece of tensor data. The M pieces of tensor data are sorted in descending order based on the size of the memory space that needs to be occupied by each piece of tensor data and a constraint quantity corresponding to each piece of tensor data, to obtain the sorting result of the M pieces of tensor data. During sorting, a plurality of pieces of tensor data that are continuously stored in same memory space in a constraint relationship may be sorted as an independent whole.

Specifically, based on the constraint relationship shown in Table 2, a constraint quantity corresponding to each piece of tensor data may be obtained. For example, for the tensor data t0, same memory space cannot be reused for the tensor data t0 with other tensor data (t1, t2, t3, t4, t5, t6, t7, t8), and a constraint quantity of the tensor data t0 is 8. For the tensor data t1, same memory space cannot be reused for the tensor data t1 with other tensor data (t0, t2, t3, t4, t5, t6, t7, t8), and a constraint quantity of the tensor data t1 is 8. For the tensor data t2, same memory space cannot be reused for the tensor data t2 with tensor data (t0, t1, t3, t4, t5, t8), and a constraint quantity of the tensor data t2 is 6. For the tensor data t3, same memory space cannot be reused for the tensor data t3 with tensor data (t0, t1, t4, t6, t8), and a constraint quantity of the tensor data t3 is 5. For the tensor data t4, same memory space cannot be reused for the tensor data t4 with tensor data (t0, t1, t2, t3, t5, t6, t7, t8), and a constraint quantity of the tensor data t4 is 8. For the tensor data t5, same memory space cannot be reused for the tensor data t5 with tensor data (t0, t1, t2, t4, t7, t8), and a constraint quantity of the tensor data t5 is 6. For the tensor data t6, same memory space cannot be reused for the tensor t6 with tensor data (t0, t1, t3, t4, t7, t8), and a constraint quantity of the tensor data t6 is 6. For the tensor data t7, same memory space cannot be reused for the tensor data t7 with tensor data (t0, t1, t4, t5, t6), and a constraint quantity of the tensor data t7 is 5. For the tensor data t8, same memory space cannot be reused for the tensor data t8 with tensor data (t0, t2, t3, t4, t5, t6, t7), and a constraint quantity of the tensor data t8 is 7.

Further, a size of memory space that needs to be occupied by the tensor data t0 is 500 KB; a size of memory space occupied by the tensor data t1 is 500 KB; a size of memory space that needs to be occupied by the tensor data t2 is 500 KB; a size of memory space occupied by the tensor data t3 is 500 KB; a size of memory space that needs to be occupied by the tensor data t4 is 500 KB; a size of memory space that needs to be occupied by the tensor data t5 is 1000 KB; a size of memory space that needs to be occupied by the tensor data t6 is 1000 KB; a size of memory space that needs to be occupied by the tensor data t7 is 1000 KB; and a size of memory space that needs to be occupied by the tensor data t8 is 1000 KB.

Therefore, the foregoing nine pieces of tensor data may be sorted in descending order. The sorting result may be shown in Table 3.

**Table 3**

| t1, t8, and t7 | t5 | t6 | t0 | t4 | t2 | t3 |
| --- | --- | --- | --- | --- | --- | --- |

It should be noted that, during sorting, a method for sorting a plurality of pieces of tensor data that are continuously stored in same memory space in a constraint relationship as an independent whole is merely an example, and should not be limited. In actual application, each piece of tensor data may also be ranked as an independent whole.

In this case, first memory space is first allocated to the tensor data t1, t7, and t8. In this case, the allocated memory space includes the first memory space. The first memory space includes memory space a, second memory space b, and third memory space c. The memory space a, the memory space b, and the memory space c are continuous memory space. The memory space a is used to store the tensor data t1 (that is, a size of the memory space a is equal to a size of the tensor data t1), the memory space b is used to store the tensor data t7 (that is, a size of the memory space b is equal to a size of the tensor data t7), and the memory space c is used to store the tensor data t8 (that is, a size of the memory space c is equal to a size of the tensor data t8). Then, memory space is allocated to the tensor data t5. The implementation process may include: determining, based on a constraint relationship between the tensor data t5 and other tensor data in Table 2, whether the allocated memory space (the first memory space) can be reused for the tensor data t5. Because the allocated first memory space cannot be reused for the tensor data t5, second memory space of a corresponding size is allocated to the tensor data t5 based on a size of memory space required by the tensor data t5. In this case, the allocated memory space includes the first memory space and the second memory space. Then, memory space is allocated to the tensor data t6. The implementation process may include: determining, based on a constraint relationship between the tensor data t6 and other tensor data in Table 2, whether the allocated memory space (the first memory space and the second memory space) can be reused for the tensor data t6. Because the second memory space can be reused for the tensor data t6, the second memory space is allocated to the tensor data t6. Then, memory space is allocated to the tensor data t0. The implementation process may include: determining, based on a constraint relationship between the tensor data t0 and other tensor data in Table 2, whether the allocated memory space (the first memory space and the second memory space) can be reused for the tensor data t0. Because the allocated memory space cannot be reused for the tensor data t0, third memory space of a corresponding size is allocated to the tensor data t0 based on a size of memory space that needs to be occupied by the tensor data t0. In this case, the allocated memory space includes the first memory space, the second memory space, and the third memory space. Then, memory space is allocated to the tensor data t4. The implementation process may include: determining, based on a constraint relationship between the tensor data t4 and other tensor data in Table 2, whether the allocated memory space (the first memory space, the second memory space, and the third memory space) can be reused for the tensor data t4. Because the allocated memory space cannot be reused for the tensor data t4, fourth memory space of a corresponding size is allocated to the tensor data t4 based on a size of memory space that needs to be occupied by the tensor data t4. In this case, the allocated memory space includes the first memory space, the second memory space, the third memory space, and the fourth memory space. Then, memory space is allocated to the tensor data t2. The implementation process may include: determining, based on a constraint relationship between the tensor data t2 and other tensor data in Table 1, whether the allocated memory space (the first memory space, the second memory space, the third memory space, and the fourth memory space) can be reused for the tensor data t2. Because the first memory space can be reused for the tensor data t2, the first memory space is allocated to the tensor data t2 (for example, the memory space c in the first memory space may be allocated to the tensor data t2). Then, memory space is allocated to the tensor data t3. The implementation process may include: determining, based on a constraint relationship between the tensor data t3 and other tensor data in Table 2, whether the allocated memory space (the first memory space, the second memory space, the third memory space, and the fourth memory space) can be reused for the tensor data. Because the first memory space can be reused for the tensor data, the first memory space is allocated to the tensor data t3 (for example, the memory space c in the first memory space may be allocated to the tensor data t3). Specifically, the allocation process may be shown in FIG. 4d. It may be understood that, in this implementation, independent memory space is allocated to each piece of tensor data, and a relationship between tensor data and memory space is in a one-to-one correspondence, that is, an amount of tensor data is the same as an amount of memory space.

It may be understood that, in the foregoing process of allocating the memory space, each piece of memory space includes a corresponding initial address and a corresponding size of storage space. Specifically, the memory space allocated to each piece of tensor data may be shown in Table 4.

**Table 4**

| Identifier | Size of tensor data | Initial address | Size of storage space | Sorting result |
|---|---|---|---|---|
| Tensor data t0 | 500 | 3500 | [3500, 4000[ | 6 |
| Tensor data t1 | 500 | 0 | [0, 500[ | 1 |
| Tensor data t2 | 500 | 1500 | [1500, 2000[ | 8 |
| Tensor data t3 | 500 | 1500 | [1500, 2000[ | 9 |
| Tensor data t4 | 500 | 4000 | [4000, 4500[ | 7 |
| Tensor data t5 | 1000 | 2500 | [2500, 3500[ | 4 |
| Tensor data t6 | 1000 | 2500 | [2500, 3500[ | 5 |
| Tensor data t7 | 1000 | 1500 | [1500, 2500[ | 3 |
| Tensor data t8 | 1000 | 500 | [500, 1500[ | 2 |

As shown in Table 4, [3500, 4000[ indicates that 3500 to 3999 are included, 4000 is not included, and a size of storage space is 500.

In some embodiments, after the allocated memory space is determined, a size of maximum memory that needs to be occupied by the entire neural network may be determined by using the allocated memory space. For example, based on the allocation process in FIG. 4d, it may be determined that the size of the maximum memory that needs to be occupied by the neural network shown in FIG. 1b is 4500 KB. In this implementation, the size of the maximum memory required by a computer device to run the entire neural network may be determined, to avoid a case in which the allocated memory cannot support normal running of the neural network.

In some embodiments, after corresponding memory space is allocated to each piece of tensor data, it is verified, based on a constraint relationship corresponding to each piece of tensor data, whether the allocated memory space is correct, and if the allocated memory space is incorrect, memory space is re-allocated to the M pieces of tensor data. For example, for the tensor data t8, in the first memory space, it is determined whether memory space corresponding to the tensor data t8 is on the right of memory space corresponding to the tensor data t1. For example, as shown in Table 4, the memory space corresponding to the tensor data t1 is [0, 500[, and the memory space corresponding to the tensor data t8 is [500, 1500[. It may be determined, based on the memory space corresponding to the tensor data t1 and the memory space corresponding to the tensor data t8, that the memory space corresponding to the tensor data t8 is on the right of the memory space corresponding to the tensor data t1. This means that the allocation is correct. For another example, for the tensor data t1, the tensor data t7, and the tensor data t8, it is determined whether memory space respectively corresponding to the tensor data t1, the tensor data t8, and the tensor data t7 is continuous memory space. For example, as shown in Table 4, memory space respectively corresponding to the tensor data t1, the tensor data t8, and the tensor data t7 is continuous memory space. The first memory space is [0, 500[, the second memory space is [500, 1500[, and the third memory space is [1500, 2500[. It may be determined, based on storage space respectively corresponding to the tensor data t1, the tensor data t8, and the tensor data t7, that memory space respectively corresponding to the tensor data t1, the tensor data t8, and the tensor data t7 is continuous memory space. This means that the allocation is correct. In this implementation, improper memory allocation can be avoided. For example, the improper memory allocation may be reflected in that an allocation result mutually exclusive with the constraint relationship occurs in the allocated memory space.

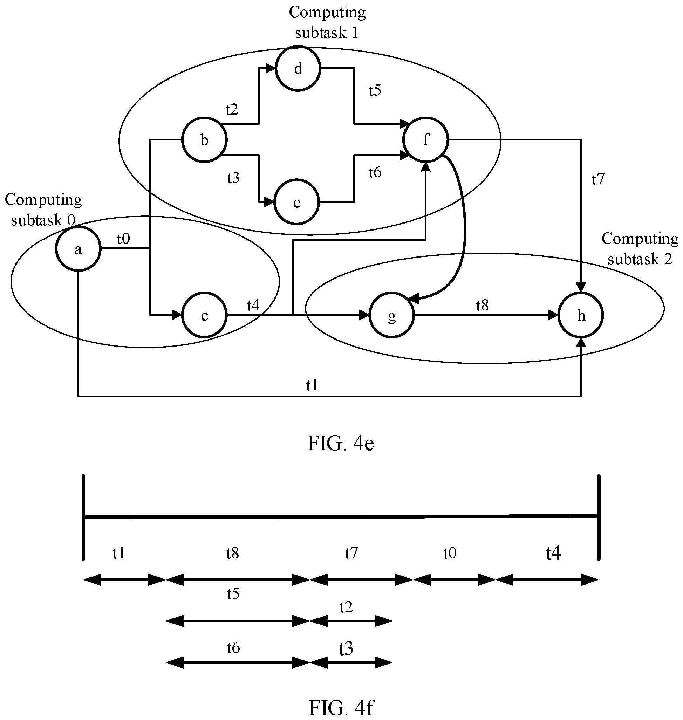

In some embodiments, the computation graph shown in FIG. 1b is used as an example. The computing subtask 0 includes a node a and a node c, and an execution sequence of the node a and the node c is: the node a -> the node c. The computing subtask 1 includes a node b, a node d, a node e, and a node f, and an execution sequence of the node b, the node d, the node e, and the node f is: the node b -> the node d/e -> the node f. The computing subtask 2 includes a node g and a node h, and an execution sequence of the node g and the node h is: the node g -> the node h. An execution relationship between the computing subtask 0 and the computing subtask 1 is parallel, and an execution relationship between the computing subtask 1 and the computing subtask 2 is serial. In a same computing subtask in the computation graph, there is a directed edge between two adjacent nodes. In this case, a computation graph corresponding to each computing subtask does not need to be adjusted. For two computing subtasks (for example, the computing subtask 1 and the computing subtask 2) that are in a serial execution relationship, because there is no directed edge between the last node f in the computing subtask 1 and the first node g in the computing subtask 2, a directed edge is added between the last node f in the computing subtask 1 and the first node g in the computing subtask 2, to obtain an updated computation graph shown in FIG. 4e.

Then, in the computation graph, an upstream node corresponding to each node, output tensor data corresponding to each node, and input tensor data corresponding to each node are determined. Specifically, the upstream node corresponding to each node, the output tensor data corresponding to each node, and the input tensor data corresponding to each node may be shown in Table 5.

**Table 5**

| Node | Upstream node | Output tensor data | Input tensor data |
|------|---------------|--------------------|--------------------|
| a | - | t0 and t1 | - |
| b | a | t2 and t3 | t0 |
| c | a | t4 | t0 |
| d | a and b | t5 | t2 |
| e | a and b | t6 | t3 |
| f | a, b, c, d, and e | t7 and $t_{dep}$ | t5, t6, and t4 |
| g | a, b, c, d, e, and f | t8 | t4 and $t_{dep}$ |
| h | a, b, c, d, e, f, and g | - | 11, t7, and t8 |

As shown in Table 5, in the computation graph shown in FIG. 4e, the node f is used as an example. In the computation graph, there is the following path: the node a -> the node b -> the node d -> the node f, the node a -> the node b -> the node e -> the node f, and the node a -> the node c -> the node f. Therefore, it may be determined that upstream nodes of the node f may include the node a, the node b, the node c, the node d, and the node e. The input tensor data of the node f includes the tensor data t5, the tensor data t6, and the tensor data t4, and the output tensor data of the node f includes the tensor data t7 and the tensor data $t_{dep}$. Implementation processes of determining an upstream node, output tensor data, and input tensor data that correspond to another node are not described herein again.

Then, a constraint relationship corresponding to each piece of tensor data is determined. For example, it may be determined whether all consumption nodes of first tensor data are upstream nodes of a production node of second tensor data; and if all the consumption nodes of the first tensor data are the upstream nodes of the production node of the second tensor data, it is determined that memory space allocated to the second tensor data can be reused for the first tensor data, or if all the consumption nodes of the first tensor data are not the upstream nodes of the production node of the second tensor data, it is determined that memory space allocated to the second tensor data cannot be reused for the first tensor data. For another example, it may be determined whether all consumption nodes of second tensor data are downstream nodes of a production node of first tensor data; and if all the consumption nodes of the second tensor data are the downstream nodes of the production node of the first tensor data, it is determined that memory space allocated to the second tensor data can be reused for the first tensor data, or if all the consumption nodes of the second tensor data are not the downstream nodes of the production node of the first tensor data, it is determined that memory space allocated to the second tensor data cannot be reused for the first tensor data.

Specifically, the constraint relationship may be carried in a constraint relationship table. In the constraint relationship table, a first value may be used to indicate that same memory space can be reused for each piece of tensor data with another piece of tensor data, a second value may be used to indicate that same memory space cannot be reused for each piece of tensor data with another piece of tensor data, and a third value may be used to indicate that each piece of tensor data and another piece of tensor data may be continuously stored in same memory space. For ease of description, a first value "0" is used to indicate that same memory space can be reused for tensor data with tensor data other than the tensor data, a second value "1" is used to indicate that same memory space cannot be reused for tensor data with tensor data other than the tensor data, and a third value "2" is used to indicate that tensor data and tensor data other than the tensor data may be continuously stored in same memory space. It should be noted that the foregoing description is merely an example, and should not be construed as a limitation. Specifically, the data structure may be represented as shown in Table 6.

**Table 6**

|    | t0 | t1 | t2 | t3 | t4 | t5 | t6 | t7 | t8 |
|----|----|----|----|----|----|----|----|----|----|
| t0 | -  | 1  | 1  | 1  | 1  | 1  | 1  | 1  | 0  |
| t1 | 1  | -  | 1  | 1  | 1  | 1  | 1  | 1  | 1  |
| t2 | 1  | 1  | -  | 0  | 1  | 1  | 0  | 0  | 0  |
| t3 | 1  | 1  | 0  | -  | 1  | 0  | 1  | 0  | 0  |
| t4 | 1  | 1  | 1  | 1  | -  | 1  | 1  | 1  | 1  |
| t5 | 1  | 1  | 1  | 0  | 1  | -  | 0  | 1  | 0  |
| t6 | 1  | 1  | 0  | 1  | 1  | 0  | -  | 1  | 0  |
| t7 | 1  | 1  | 0  | 0  | 1  | 1  | 1  | 2  | -  |
| t8 | 0  | 2  | 0  | 0  | 1  | 0  | 0  | -  | 1  |

It should be noted that, in a case of considering whether to reuse memory space, constraint relationships between every two pieces of tensor data are symmetric, and the symmetry is reflected in a relationship that is exactly the same as an inverse relationship of the constraint relationship. As shown in Table 2, for example, a constraint relationship between the tensor data t2 and the tensor data t8 is determined. In the computation graph shown in FIG. 4e, a production node of the tensor data t7 is f, and a consumption node of the tensor data t2 is d. Because the consumption node d of the tensor data t2 is an upstream node of the production node f of the tensor data t7, it may be determined that same memory space can be reused for the tensor data t7 with the tensor data t2. In the computation graph shown in FIG. 4e, in the computing subtask 1, the node b is a control selection node, and the node has two branches. One branch is: the node b -> the node d -> the node f. The other branch is: the node b -> the node e -> the node f. In one operation of the neural network, only one branch is valid. For the tensor data t2 and the tensor data t3, a constraint relationship between the tensor data t2 and the tensor data t3 is that the tensor data t2 and the tensor data t3 do not require two pieces of independent memory space, that is, same memory space can be reused. For the tensor data t5 and the tensor data t6, a constraint relationship between the tensor data t5 and the tensor data t6 is that the tensor data t5 and the tensor data t6 do not require two pieces of independent memory space, that is, same memory space can be reused.

It should be further noted that, considering that a plurality of pieces of tensor data are stored in continuous memory space, constraint relationships between every two pieces of tensor data are asymmetric. In this case, orders between every two pieces of memory space need to be considered.

Then, for example, the information about each piece of tensor data includes a size of memory space that needs to be occupied by each piece of tensor data and a constraint relationship corresponding to each piece of tensor data. The M pieces of tensor data are sorted in descending order based on the size of the memory space that needs to be occupied by each piece of tensor data and a constraint quantity corresponding to each piece of tensor data, to obtain the sorting result of the M pieces of tensor data. During sorting, a plurality of pieces of tensor data that are continuously stored in same memory space in a constraint relationship may be sorted as an independent whole.

Based on the constraint relationship shown in Table 6, a constraint quantity corresponding to each piece of tensor data may be obtained. For example, for the tensor data t0, same memory space cannot be reused for the tensor data t0 with other tensor data (t1, t2, t3, t4, t5, t6, t7), and a constraint quantity of the tensor data t0 is 7. For the tensor data t1, same memory space cannot be reused for the tensor data t1 with other tensor data (t0, t2, t3, t4, t5, t6, t7, t8), and a constraint quantity of the tensor data t1 is 8. For the tensor data t2, same memory space cannot be reused for the tensor data t2 with tensor data (t0, t1, t4, t5), and a constraint quantity of the tensor data t2 is 4. For the tensor data t3, same memory space cannot be reused for the tensor data t3 with tensor data (t0, t1, t4, t6), and a constraint quantity of the tensor data t3 is 4. For the tensor data t4, same memory space cannot be reused for the tensor data t4 with tensor data (t0, t1, t2, t3, t5, t6, t7, t8), and a constraint quantity of the tensor data t4 is 8. For the tensor data t5, same memory space cannot be reused for the tensor data t5 with tensor data (t0, t1, t2, t4, t7), and a constraint quantity of the tensor data t5 is 5. For the tensor data t6, same memory space cannot be reused for the tensor data t6 with tensor data (t0, t1, t3, t4, t7), and a constraint quantity of the tensor data t6 is 5. For the tensor data t7, same memory space cannot be reused for the tensor data t7 with tensor data (t0, t1, t4, t5, t6), and a constraint quantity of the tensor data t7 is 5. For the tensor data t8, same memory space cannot be reused for the tensor data t8 with tensor data t4, t8), and a constraint quantity of the tensor data t8 is 2.

Further, a size of memory space that needs to be occupied by the tensor data t0 is 500 KB; a size of memory space occupied by the tensor data t1 is 500 KB; a size of memory space that needs to be occupied by the tensor data t2 is 500 KB; a size of memory space occupied by the tensor data t3 is 500 KB; a size of memory space that needs to be occupied by the tensor data t4 is 500 KB; a size of memory space that needs to be occupied by the tensor data t5 is 1000 KB; a size of memory space that needs to be occupied by the tensor data t6 is 1000 KB; a size of memory space that needs to be occupied by the tensor data t7 is 1000 KB; and a size of memory space that needs to be occupied by the tensor data t8 is 1000 KB.

Therefore, the foregoing nine pieces of tensor data may be sorted in descending order. The sorting result may be shown in Table 7.

**Table 7**

| t1, t8, and t7 | t5 | t6 | t0 | t4 | t2 | t3 |
|---|---|---|---|---|---|---|

It should be noted that, during sorting, a method for sorting a plurality of pieces of tensor data that are continuously stored in same memory space in a constraint relationship as an independent whole is merely an example, and should not be limited. In actual application, each piece of tensor data may also be ranked as an independent whole.

In this case, first memory space is first allocated to the tensor data t1, t7, and t8. In this case, the allocated memory space includes the first memory space. The first memory space includes memory space a, memory space b, and memory space c. The memory space a, the memory space b, and the memory space c are continuous memory space. The memory space a is used to store the tensor data t1 (that is, a size of the memory space a is equal to a size of the tensor data t1), the memory space b is used to store the tensor data t8 (that is, a size of the memory space b is equal to a size of the tensor data t8), and the memory space c is used to store the tensor data t7 (that is, a size of the memory space c is equal to a size of the tensor data t7). Then, memory space is allocated to the tensor data t5. The implementation process may include: determining, based on a constraint relationship between the tensor data t5 and other tensor data in Table 7, whether the allocated memory space (the first memory space) can be reused for the tensor data t5. Because the first memory space can be reused for the tensor data t5, second memory space is allocated to the tensor data t5 (for example, the memory space b in the first memory space may be allocated to the tensor data 5). Then, memory space is allocated to the tensor data t6. The implementation process may include: determining, based on a constraint relationship between the tensor data t6 and other tensor data in Table 7, whether the allocated memory space (the first memory space) can be reused for the tensor data t6. Because the first memory space can be reused for the tensor data t6, the first memory space is allocated to the tensor data t6 (for example, the memory space b in the first memory space may be allocated to the tensor data t6). Then, memory space is allocated to the tensor data t0. The implementation process may include: determining, based on a constraint relationship between the tensor data t0 and other tensor data in Table 7, whether the allocated memory space (the first memory space) can be reused for the tensor data t0. Because the allocated memory space cannot be reused for the tensor data t0, second memory space of a corresponding size is allocated to the tensor data t0 based on a size of memory space that needs to be occupied by the tensor data t0. In this case, the allocated memory space includes the first memory space and the second memory space. Then, memory space is allocated to the tensor data t4. The implementation process may include: determining, based on a constraint relationship between the tensor data t4 and other tensor data in Table 7, whether the allocated memory space (the first memory space and the second memory space) can be reused for the tensor data t4. Because the allocated memory space cannot be reused for the tensor data t4, third memory space of a corresponding size is allocated to the tensor data t4 based on a size of memory space that needs to be occupied by the tensor data t4. In this case, the allocated memory space includes the first memory space, the second memory space, and the third memory space. Then, memory space is allocated to the tensor data t2. The implementation process may include: determining, based on a constraint relationship between the tensor data t2 and other tensor data in Table 7, whether the allocated memory space (the first memory space, the second memory space, and the third memory space) can be reused for the tensor data t2. Because the first memory space can be reused for the tensor data t2, the first memory space is allocated to the tensor data t2 (for example, the third memory space in the first memory space may be allocated to the tensor data t2). Then, memory space is allocated to the tensor data t3. The implementation process may include: determining, based on a constraint relationship between the tensor data t3 and other tensor data in Table 7, whether the allocated memory space (the first memory space, the second memory space, and the third memory space) can be reused for the tensor data. Because the first memory space can be reused for the tensor data, the first memory space is allocated to the tensor data t3 (for example, the third memory space in the first memory space may be allocated to the tensor data t3). Specifically, the allocation process may be shown in FIG. 4f. It may be understood that, in this implementation, independent memory space is allocated to each piece of tensor data, and a relationship between tensor data and memory space is in a one-to-one correspondence, that is, an amount of tensor data is the same as an amount of memory space.

It may be understood that, in the foregoing process of allocating the memory space, each piece of memory space includes a corresponding initial address and a corresponding size of storage space. Specifically, memory space allocated to each piece of tensor data may be shown in Table 8.

**Table 8**

| Identifier | Size of tensor data | Initial address | Size of storage space | Sorting result |
|---|---|---|---|---|
| t0 | 500 | 2500 | [2500, 3000[ | 6 |
| t1 | 500 | 0 | [0, 500[ | 1 |
| t2 | 500 | 1500 | [1500, 2000[ | 8 |
| t3 | 500 | 1500 | [1500, 2000[ | 9 |
| t4 | 500 | 3000 | [3000, 3500[ | 7 |
| t5 | 1000 | 500 | [500, 1500[ | 4 |
| t6 | 1000 | 500 | [500, 1000[ | 5 |
| t7 | 1000 | 1500 | [1500, 2500[ | 3 |
| t8 | 1000 | 500 | [500, 1000[ | 2 |

In some embodiments, after the allocated memory space is determined, a size of maximum memory that needs to be occupied by the entire neural network may be determined by using the allocated memory space. For example, a size of maximum memory that needs to be occupied by the neural network shown in FIG. 4e is 3500 KB. In this implementation, the size of the maximum memory required by a computer device to run the entire neural network may be determined, to avoid a case in which the allocated memory cannot support normal running of the neural network.

In some embodiments, after corresponding memory space is allocated to each piece of tensor data, it is verified, based on a constraint relationship corresponding to each piece of tensor data, whether the allocated memory space is correct, and if the allocated memory space is incorrect, memory space is re-allocated to the M pieces of tensor data. For example, for the tensor data t8, in the first memory space, it is determined whether memory space corresponding to the tensor data t8 is on the right of memory space corresponding to the tensor data t1. For example, as shown in Table 4, the memory space corresponding to the tensor data t1 is [0, 500[, and the memory space corresponding to the tensor data t8 is [500, 1000[. It may be determined, based on the memory space corresponding to the tensor data t1 and the memory space corresponding to the tensor data t8, that the memory space corresponding to the tensor data t8 is on the right of the memory space corresponding to the tensor data t1. This means that the allocation is correct. In this implementation, improper memory allocation can be avoided. For example, the improper memory allocation may be reflected in that an allocation result mutually exclusive with the constraint relationship occurs in the allocated memory space.

In some embodiments, the computation graph shown in FIG. 1b is used as an example. The computing subtask 0 includes a node a and a node c, and an execution sequence of the node a and the node c is: the node a -> the node c. The computing subtask 1 includes a node b, a node d, a node e, and a node f, and an execution sequence of the node b, the node d, the node e, and the node f is: the node b -> the node d/e -> the node f. The computing subtask 2 includes a node g and a node h, and an execution sequence of the node g and the node h is: the node g -> the node h. An execution relationship between the computing subtask 0, the computing subtask 1, and the computing subtask 2 is parallel. In a same computing subtask in the computation graph, an execution sequence of the nodes is obtained, and then same nodes are sequentially encoded based on the execution sequence of the nodes, to obtain an identifier (for example, a sequence number) corresponding to each node. In two adjacent nodes, an identifier corresponding to a current node is less than an identifier corresponding to a next node. For example, the computing subtask 0 in FIG. 1b is used as an example. An identifier of each node in the computing subtask 0 may be shown in Table 9.

**Table 9**

| Node | Identifier | Output tensor data | Input tensor data |
|---|---|---|---|
| a | Start ID-00a | t0: 00a-00c<br>t1: 00a-00h | - |
| c | End ID-00c | t4: 00c-00f/t4: 00c-00h | t0: 00a-00c |

It should be noted that the identifier shown in Table 9 is unique.

For example, if End ID is greater than Start ID, it indicates that a node corresponding to End ID is an upstream node of a node corresponding to Start ID. Then, a constraint relationship corresponding to each piece of tensor data is determined. For specific implementations of how to sort the M pieces of tensor data based on the information about each piece of tensor data and how to allocate memory space to the tensor data, refer to the foregoing descriptions. Details are not described herein again.

In some embodiments, the computation graph shown in FIG. 1b is used as an example. The computing subtask 0 includes a node a and a node c, and an execution sequence of the node a and the node c is: the node a -> the node c. The computing subtask 1 includes a node b, a node d, a node e, and a node f, and an execution sequence of the node b, the node d, the node e, and the node f is: the node b -> the node d/e -> the node f. The computing subtask 2 includes a node g and a node h, and an execution sequence of the node g and the node h is: the node g -> the node h. An execution relationship between the computing subtask 0 and the computing subtask 1 is parallel, and an execution relationship between the computing subtask 1 and the computing subtask 2 is serial. In a same computing subtask in the computation graph, an execution sequence of the nodes is obtained, and then same nodes are sequentially encoded based on the execution sequence of the nodes, to obtain an identifier (for example, a sequence number) corresponding to each node. In at least two computing subtasks that are in a serial execution relationship, an execution sequence of nodes in the at least two computing subtasks is obtained, and the nodes in the at least two computing subtasks are sequentially encoded based on the execution sequence of the nodes, to obtain an identifier corresponding to each node. In two adjacent nodes, an identifier corresponding to a current node is less than an identifier corresponding to a next node.

For example, the computing subtask 2 in FIG. 1b is used as an example. An identifier of each node in the computing subtask 2 may be shown in Table 10.

**Table 10**

| Node | Identifier | Output tensor data | Input tensor data |
|------|-----------|--------------------|--------------------|
| g | Start ID2-00g | t7: 00g-00h | t4: 00c-00g |
| h | End ID2-00h | - | t1: 00a-00h<br>t7: 00g-00h<br>t8: 00f-00h |

It should be noted that the identifier shown in Table 10 is unique.

For example, if End ID is greater than Start ID, it indicates that a node corresponding to End ID is an upstream node of a node corresponding to Start ID. Then, a constraint relationship corresponding to each piece of tensor data is determined. For specific implementations of how to sort the M pieces of tensor data based on the information about each piece of tensor data and how to allocate memory space to the tensor data, refer to the foregoing descriptions. Details are not described herein again.

In some embodiments, the computation graph corresponding to the neural network includes three pieces of tensor data, which may be respectively represented as tensor data t000, tensor data t100, and tensor data t200. A size of memory space that needs to be occupied by the tensor data t000 is 1000 KB, a size of memory space that needs to be occupied by the tensor data t100 is 600 KB, and a size of memory space that needs to be occupied by the tensor data t200 is 450 KB.

Further, constraint relationships respectively corresponding to the foregoing three pieces of tensor data may be shown in Table 11.

**Table 11**

|      | 1000 | t100 | t200 |
|------|------|------|------|
| t000 | -    | 0    | 0    |
| t100 | 0    | -    | 1    |
| t200 | 0    | 1    | -    |

In the constraint relationship table shown in Table 11, a first value "0" is used to indicate that same memory space can be reused for tensor data with data other than the tensor data, and a second value "1" is used to indicate that same memory space cannot be reused for tensor data with tensor data other than the tensor data. For how to determine the constraint relationship corresponding to each piece of tensor data, refer to the foregoing descriptions.

Details are not described herein again.

As shown in Table 11, for the tensor data t000, same memory space can be reused for the tensor data t000 with the tensor data t100, and same memory space can be reused for the tensor data t000 with the tensor data t200. For the tensor data t100, same memory space can be reused for the tensor data t100 with the tensor data t000, but same memory space cannot be reused for the tensor data t100 with the tensor data t200. For the tensor data t200, same memory space can be reused for the tensor data t200 with the tensor data t000, but same memory space cannot be reused for the tensor data t200 with the tensor data t100.

Then, the foregoing three pieces of tensor data are sorted in descending order based on a size of memory space that needs to be occupied by each piece of tensor data, to obtain a sorting result. Specifically, the sorting result may be shown in Table 12.

**Table 12**

| 1000 | t100 | t200 |
|------|------|------|

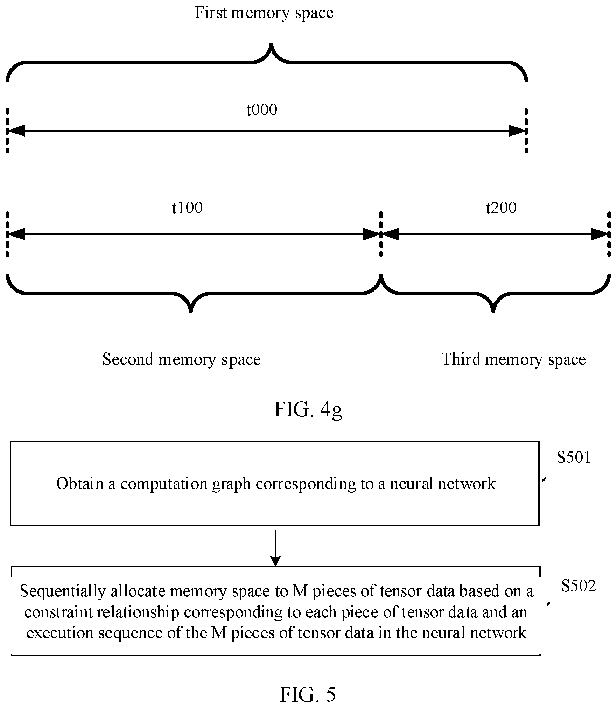

In this case, when allocating memory space to the three pieces of tensor data, the memory allocation apparatus first creates first memory space, where the first memory space is used to store the tensor data t000. For example, an initial address of the created first memory space is a, and a size of storage space is a size of memory space that needs to be occupied by the tensor data t000. Then, the memory allocation apparatus creates second memory space, where the second memory space is used to store the tensor data t100. Because the memory space allocated to the tensor data t000 can be reused for the tensor data t100, an initial address of the created second memory space is a (that is, is the same as the initial address of the first memory space), and a size of storage space is memory space that needs to be occupied by the tensor data t100. As described above, the size of the memory space that needs to be occupied by the tensor data t000 is 1000 KB, and the size of the memory space that needs to be occupied by the tensor data t100 is 600 KB. This means that a part [a, 600[ of the first memory space is reused for the tensor data t100. Then, the memory allocation apparatus creates third memory space, where the third memory space is used to store the tensor data t200. Because the memory space [a, 1000[ allocated to the tensor data t000 can be reused for the tensor data t200, but the memory space [a, 600[ allocated to the tensor data t100 cannot be reused for the tensor data t200, an initial address of the third memory space is 600, and a size of storage space is a size of memory space that needs to be occupied by the tensor data t200. This means that a part [600, 1000[ of the first memory space is reused for the tensor data t200. Specifically, the allocation process may be shown in FIG. 4g.

It should be noted that, in some embodiments, the foregoing constraint relationship may be further reflected in that memory space allocated to tensor data and memory space allocated to tensor data other than the tensor data are discontinuous memory space (for example, memory space 1 is allocated to tensor data, and memory space 2 is allocated to tensor data 2, where there is a space gap between the memory space 1 and the memory space 2), and whether the tensor data and the tensor data other than the tensor data meet a spatial co-location constraint, where the spatial co-location constraint is reflected in that same memory space cannot be reused for an $i^{th}$ piece of tensor data with a $j^{th}$ piece of tensor data, and same memory space can be reused for the $i^{th}$ piece of tensor data with a $k^{th}$ piece of tensor data. In this case, same memory space cannot be reused for the $i^{th}$ piece of tensor data with an $l^{th}$ piece of tensor data, where the $l^{th}$ piece of tensor data is tensor data that overlaps between the $j^{th}$ piece of tensor data and the $k^{th}$ piece of tensor data, or the like.

Compared with the conventional technology in which memory space is allocated and reused in a sequence of running of an entire neural network, in this embodiment of this application in which the memory allocation apparatus sequentially allocates memory space of a corresponding size to all pieces of tensor data based on the sorting result of the M pieces of tensor data, so that a phenomenon of improper memory allocation can be avoided, thereby saving memory that needs to be occupied by the entire neural network, and optimizing memory allocation of the neural network.

FIG. 5 is a schematic flowchart of a neural network memory allocation method according to an embodiment of this application. The method may be performed by a server on which a neural network is run, or may be performed by a terminal device on which a neural network is run. For ease of description, an example in which an execution body is a terminal device on which a neural network is run is used for description. In the schematic flowchart of the method shown in FIG. 5, it may be specified that a plurality of pieces of memory space are required when the entire neural network is run. As shown in FIG. 5, the method may include but is not limited to the following steps.

Step S501: Obtain a computation graph corresponding to a neural network, where the computation graph includes N nodes and a directed edge that connects different nodes, a directed edge of the computation graph carries tensor data, the computation graph includes M pieces of tensor data, and M is an integer greater than 1.

For a specific implementation of step S501, refer to the foregoing descriptions. Details are not described herein again.

Step S502: Sequentially allocate memory space to the M pieces of tensor data based on a constraint relationship corresponding to each piece of tensor data and an execution sequence of the M pieces of tensor data in the neural network.

In this embodiment of this application, an implementation process of determining a constraint relationship corresponding to each piece of tensor data in the computation graph may include: determining whether all consumption nodes of first tensor data are upstream nodes of a production node of second tensor data; and if all the consumption nodes of the first tensor data are the upstream nodes of the production node of the second tensor data, determining that memory space allocated to the second tensor data can be reused for the first tensor data, or if all the consumption nodes of the first tensor data are not the upstream nodes of the production node of the second tensor data, determining that memory space allocated to the second tensor data cannot be reused for the first tensor data; and for another example, determining whether all consumption nodes of second tensor data are downstream nodes of a production node of first tensor data; and if all the consumption nodes of the second tensor data are the downstream nodes of the production node of the first tensor data, determining that memory space allocated to the second tensor data can be reused for the first tensor data, or if all the consumption nodes of the second tensor data are not the downstream nodes of the production node of the first tensor data, determining that memory space allocated to the second tensor data cannot be reused for the first tensor data.

In this embodiment of this application, the foregoing method may be applied to a scenario in which a plurality of computing subtasks are parallel (for example, execution relationships between the plurality of computing subtasks are all parallel; for another example, execution relationships between the plurality of computing subtasks include serial and parallel). The terminal device obtains a constraint relationship corresponding to each piece of tensor data, and then sequentially allocates memory to the tensor data based on an execution sequence of the tensor data in the neural network and the constraint relationship corresponding to each piece of tensor data, to avoid a case in which in a parallel scenario, an operator operation result is incorrect because operators reuse same memory space in different computing subtasks, and ensure accuracy of a calculation result of the neural network.

FIG. 1a to FIG. 5 describe in detail the memory allocation method in embodiments of this application. The following describes apparatuses in embodiments of this application with reference to accompanying drawings.

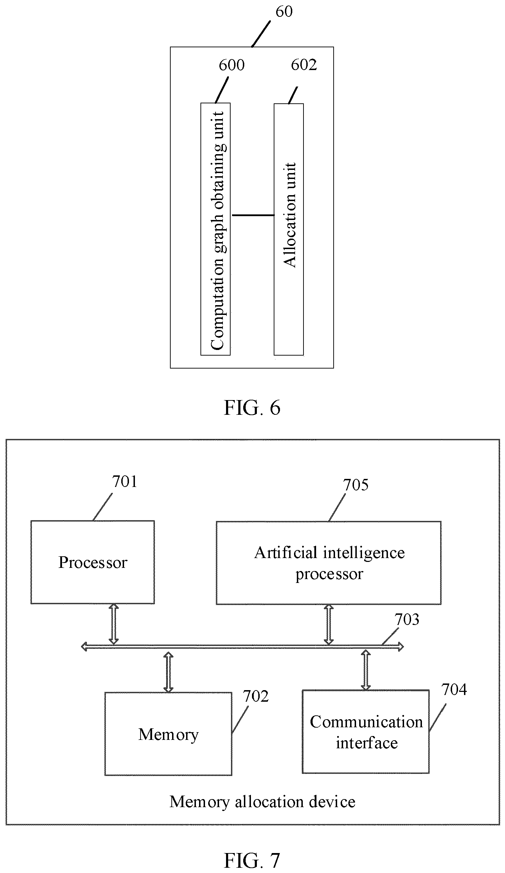

FIG. 6 is a schematic diagram of a structure of a memory allocation apparatus 60 according to an embodiment of this application. The memory allocation apparatus 60 shown in FIG. 6 may include:

a computation graph obtaining unit 600, configured to obtain a computation graph corresponding to a neural network, where the computation graph includes N nodes and a directed edge that connects different nodes, a directed edge of the computation graph carries tensor data, the computation graph includes M pieces of tensor data, and M is an integer greater than 1; and an allocation unit 602, configured to sequentially allocate memory space to the M pieces of tensor data based on a sorting result of the M pieces of tensor data, where if at least a part of the allocated memory space can be reused for one of the M pieces of tensor data, the at least the part of the memory space that can be reused for the tensor data is allocated to the tensor data, where the allocated memory space is memory space that has been allocated to the M pieces of tensor data before the tensor data, the sorting result indicates a sequence of allocating memory space to the M pieces of tensor data, the sorting result is related to information about each of the M pieces of tensor data, the information about each piece of tensor data indicates at least one of the following information: a constraint relationship corresponding to each piece of tensor data and a quantity of nodes to which each piece of tensor data flows, and the constraint relationship indicates a relationship between available memory space of one of the M pieces of tensor data and available memory space of other tensor data in the M pieces of tensor data. In a possible implementation, the allocation unit 602 is further configured to: if the allocated memory space cannot be reused for the tensor data, allocate other memory space to the tensor data, where the other memory space is different from the allocated memory space.

In a possible implementation, the constraint relationship indicates at least one of the following relationships: a relationship between available memory space of one piece of tensor data and available memory space of another piece of tensor data is reusable, a relationship between available memory space of one piece of tensor data and available memory space of another piece of tensor data is non-reusable, and a relationship between available memory space of one piece of tensor data and available memory space of another piece of tensor data is non-reusable and continuous.

In a possible implementation, the constraint relationship is carried in a constraint relationship table, the constraint relationship table includes identifiers of the M data tensors, and in the constraint relationship table, a first value is used to indicate that the relationship between the available memory space of the one piece of tensor data and the available memory space of the another piece of tensor data is reusable, a second value is used to indicate that the relationship between the available memory space of the one piece of tensor data and the available memory space of the another piece of tensor data is non-reusable, and a third value is used to indicate that the relationship between the available memory space of the one piece of tensor data and the available memory space of the another piece of tensor data is non-reusable and continuous.

In a possible implementation, when all consumption nodes of first tensor data are upstream nodes of a production node of second tensor data, or when all consumption nodes of the second tensor data are downstream nodes of a production node of the first tensor data, memory space allocated to the second tensor data can be reused for the first tensor data; or when all the consumption nodes of the first tensor data are not the upstream nodes of the production node of the second tensor data, or when all the consumption nodes of the second tensor data are not the downstream nodes of the production node of the first tensor data, the memory space allocated to the second tensor data cannot be reused for the first tensor data, where the first tensor data and the second tensor data are any two of the M pieces of tensor data, the consumption node is a node to which tensor data flows, and the production node is a node from which tensor data flows.

In a possible implementation, the computation graph includes a plurality of computing subtasks, the computing subtask indicates a computing function by using a group of nodes and an edge related to the group of nodes, and an execution relationship between the plurality of computing subtasks is parallel; and the apparatus further includes:

a computation graph updating unit 604, configured to: in one computing subtask, if there is no directed edge between two adjacent nodes, add a directed edge between the two adjacent nodes, to update the computing graph, wherein each added directed edge carries corresponding tensor data, and the two adjacent nodes are two nodes that are adjacent in an execution sequence in the computing subtask; and
an information obtaining unit 606, configured to obtain the information about each piece of tensor data based on the updated computation graph.

In a possible implementation, the computation graph further includes a first computing subtask and a second computing subtask that are in a serial execution relationship, and the first computing subtask is before the second computing subtask in an execution sequence; and the computation graph updating unit 604 is further configured to: if there is no directed edge between a last node in the first computing subtask and a first node in the second computing subtask, add a directed edge between the last node in the first computing subtask and the first node in the second computing subtask.

In a possible implementation, in the computation graph, an identifier of a production node of tensor data is less than an identifier of a consumption node of the tensor data, and the production node of the tensor data and the consumption node of the tensor data are two adjacent nodes.

In a possible implementation, an identifier of each node in the computation graph is used to determine the information about each of the M pieces of tensor data.

In a possible implementation, the information about each piece of tensor data indicates the constraint relationship corresponding to each piece of tensor data, and the apparatus further includes:
a first sorting unit 608, configured to: obtain, based on the constraint relationship corresponding to each piece of tensor data, constraint quantities respectively corresponding to the M pieces of tensor data, wherein the constraint quantity is an amount of tensor data that is in other tensor data and for which same memory space cannot be reused with the tensor data; and sort the M pieces of tensor data based on the constraint quantities respectively corresponding to the M pieces of tensor data, to obtain the sorting result of the M pieces of tensor data.

In a possible implementation, the information about each piece of tensor data indicates a quantity of nodes to which each piece of tensor data flows, and the apparatus further includes:
a second sorting unit 6010, configured to sort the M pieces of tensor data based on quantities of consumption nodes that respectively correspond to the M pieces of tensor data, to obtain the sorting result of the M pieces of tensor data.

In a possible implementation, the apparatus further includes:
a third sorting unit 6012, configured to sort the M pieces of tensor data based on the information about each piece of tensor data by using a heuristic algorithm, to obtain the sorting result of the M pieces of tensor data within a preset time period.

In a possible implementation, the sorting result is a sorting result obtained after optimization, and a size of maximum memory that needs to be occupied by the neural network and that corresponds to the sorting result obtained after optimization is less than a size of maximum memory that needs to be occupied by the neural network and that is determined based on a sorting result existing before optimization.

In this embodiment of this application, for specific implementations of the units, refer to related descriptions in the foregoing embodiments. Details are not described herein again.

Compared with the conventional technology in which memory space is allocated and reused in a sequence of running of an entire neural network, in this embodiment of this application in which the memory allocation apparatus obtains the sorting result of the M pieces of tensor data based on the information about each piece of tensor data, to allocate memory space of a corresponding size to each piece of tensor data based on the sorting result, so that a phenomenon of improper memory allocation can be avoided, thereby saving memory that needs to be occupied by the entire neural network, and optimizing memory allocation of the neural network.

As shown in FIG. 7, an embodiment of this application provides a memory allocation apparatus 70. The memory allocation apparatus 70 may be specifically a terminal device or a server. In some embodiments, the memory allocation apparatus 70 may be specifically a central control module in the server, or a function of the memory allocation apparatus 70 is implemented by a central control module in the server. In some embodiments, the memory allocation apparatus 70 may be specifically a central control module in the terminal device, or a function of the memory allocation apparatus 70 is implemented by a central control module in the terminal device. As shown in FIG. 7, the memory allocation apparatus may include a processor 701, a memory 702, a communications bus 703, and a communications interface 704, and the processor 701 is connected to the memory 702 and the communications interface 703 through the communications bus.

The processor 701 may be a general-purpose central processing unit (Central Processing Unit, CPU), a microprocessor, an application-specific integrated circuit (Application-Specific Integrated Circuit, ASIC), a graphics processing unit (Graphics Processing Unit, GPU), a neural-network processing unit (Network Processing Unit, NPU), or one or more integrated circuits, and is configured to execute a related program, to perform the memory allocation method described in the method embodiments of this application.

The processor 701 may alternatively be an integrated circuit chip and has a signal processing capability. In an implementation process, steps of the memory allocation method in this application may be completed by using an integrated logic circuit of hardware in the processor 701 or an instruction in a form of software. The processor 701 may alternatively be a general-purpose processor, a digital signal processor (Digital Signal Processing, DSP), an application-specific integrated circuit (ASIC), a field programmable gate array (Field Programmable Gate Array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 701, and the processor 701 reads information in the memory 702, and performs the memory allocation method in the method embodiments of this application in combination with hardware of the processor 701.

The memory 702 may be a read-only memory (Read-Only Memory, ROM), a static storage device, a dynamic storage device, or a random access memory (Random Access Memory, RAM). The memory 702 may store a program and data, for example, a program of the memory allocation method in embodiments of this application. When the program stored in the memory 701 is executed by the processor 702, the processor 701 and the communications interface 704 are configured to perform steps of the memory allocation method in embodiments of this application.

For example, in this embodiment of this application, a program is used to implement the memory allocation method in embodiments of this application.

For example, the communications interface 704 is but not limited to a transceiver apparatus such as a transceiver, to implement communication between the memory allocation apparatus 700 and another device or a communications network. For example, a trained neural network may be obtained through the communications interface 704, to implement information exchange with an execution device, a client device, user equipment, a terminal device, or the like.

Optionally, the memory allocation apparatus may further include an artificial intelligence processor 705, and the artificial intelligence processor 705 may be any processor suitable for large-scale OR operation processing such as a neural-network processing unit (Network Processing Unit, NPU), a tensor processing unit (Tensor Processing Unit, TPU), or a graphics processing unit (Graphics Processing Unit, GPU). The artificial intelligence processor 705 may be mounted on a host CPU (Host CPU) as a coprocessor, and the host CPU assigns a task to the artificial intelligence processor 705. The artificial intelligence processor 705 may implement one or more operations in the foregoing memory allocation method. An NPU is used as an example. A core part of the NPU is an operation circuit, and an operation circuit is controlled by using a controller to extract matrix data in the memory 702 and perform multiplication and addition operations.

The processor 701 is configured to invoke data and program code in the memory, to perform the following steps:

obtaining a computation graph corresponding to a neural network, wherein the computation graph comprises N nodes and a directed edge that connects different nodes, a directed edge of the computation graph carries tensor data, the computation graph comprises M pieces of tensor data, and M is an integer greater than 1; and

sequentially allocating memory space to the M pieces of tensor data based on a sorting result of the M pieces of tensor data, wherein if at least a part of the allocated memory space can be reused for one of the M pieces of tensor data, the at least the part of the memory space that can be reused for the tensor data is allocated to the tensor data, wherein the allocated memory space is memory space that has been allocated to the M pieces of tensor data before the tensor data, the sorting result indicates a sequence of allocating memory space to the M pieces of tensor data, the sorting result is related to information about each of the M pieces of tensor data, the information about each piece of tensor data indicates at least one of the following information: a constraint relationship corresponding to each piece of tensor data and a quantity of nodes to which each piece of tensor data flows, and the constraint relationship indicates a relationship between available memory space of one of the M pieces of tensor data and available memory space of other tensor data in the M pieces of tensor data.

The processor 701 is further configured to:
if the allocated memory space cannot be reused for the tensor data, allocate other memory space to the tensor data, wherein the other memory space is different from the allocated memory space.

The constraint relationship indicates at least one of the following relationships: a relationship between available memory space of one piece of tensor data and available memory space of another piece of tensor data is reusable, a relationship between available memory space of one piece of tensor data and available memory space of another piece of tensor data is non-reusable, and a relationship between available memory space of one piece of tensor data and available memory space of another piece of tensor data is non-reusable and continuous.

The constraint relationship is carried in a constraint relationship table, the constraint relationship table includes identifiers of the M data tensors, and in the constraint relationship table, a first value is used to indicate that the relationship between the available memory space of the one piece of tensor data and the available memory space of the another piece of tensor data is reusable, a second value is used to indicate that the relationship between the available memory space of the one piece of tensor data and the available memory space of the another piece of tensor data is non-reusable, and a third value is used to indicate that the relationship between the available memory space of the one piece of tensor data and the available memory space of the another piece of tensor data is non-reusable and continuous.

When all consumption nodes of first tensor data are upstream nodes of a production node of second tensor data, or when all consumption nodes of the second tensor data are downstream nodes of a production node of the first tensor data, memory space allocated to the second tensor data can be reused for the first tensor data; or when all the consumption nodes of the first tensor data are not the upstream nodes of the production node of the second tensor data, or when all the consumption nodes of the second tensor data are not the downstream nodes of the production node of the first tensor data, the memory space allocated to the second tensor data cannot be reused for the first tensor data, where the first tensor data and the second tensor data are any two of the M pieces of tensor data, the consumption node is a node to which tensor data flows, and the production node is a node from which tensor data flows.

The computation graph includes a plurality of computing subtasks, the computing subtask indicates a computing function by using a group of nodes and an edge related to the group of nodes, and an execution relationship between the plurality of computing subtasks is parallel; and the processor 701 is further configured to:

in one computing subtask, if there is no directed edge between two adjacent nodes, add a directed edge between the two adjacent nodes, to update the computing graph, wherein each added directed edge carries corresponding tensor data, and the two adjacent nodes are two nodes that are adjacent in an execution sequence in the computing subtask; and
obtain the information about each piece of tensor data based on the updated computation graph.

The computation graph further includes a first computing subtask and a second computing subtask that are in a serial execution relationship, and the first computing subtask is before the second computing subtask in an execution sequence, and that the processor 701 updates the computation graph further includes:
if there is no directed edge between a last node in the first computing subtask and a first node in the second computing subtask, adding a directed edge between the last node in the first computing subtask and the first node in the second computing subtask.

In the computation graph, an identifier of a production node of tensor data is less than an identifier of a consumption node of the tensor data, and the production node of the tensor data and the consumption node of the tensor data are two adjacent nodes.

An identifier of each node in the computation graph is used to determine the information about each of the M pieces of tensor data.

The information about each piece of tensor data indicates the constraint relationship corresponding to each piece of tensor data, and the processor 701 is further configured to:

obtain, based on the constraint relationship corresponding to each piece of tensor data, constraint quantities respectively corresponding to the M pieces of tensor data, where the constraint quantity is an amount of tensor data that is in other tensor data and for which same memory space cannot be reused with the tensor data; and
sort the M pieces of tensor data based on the constraint quantities respectively corresponding to the M pieces of tensor data, to obtain the sorting result of the M pieces of tensor data.

The information about each piece of tensor data indicates a quantity of nodes to which each piece of tensor data flows, and the processor 701 is further configured to:
sort the M pieces of tensor data based on quantities of consumption nodes that respectively correspond to the M pieces of tensor data, to obtain the sorting result of the M pieces of tensor data.

The processor 701 is further configured to:

sort the M pieces of tensor data based on the information about each piece of tensor data by using a heuristic algorithm, to obtain the sorting result of the M pieces of tensor data within a preset time period.

The sorting result is a sorting result obtained after optimization, and a size of maximum memory that needs to be occupied by the neural network and that corresponds to the sorting result obtained after optimization is less than a size of maximum memory that needs to be occupied by the neural network and that is determined based on a sorting result existing before optimization.

It should be understood that for an implementation of each component, refer to corresponding descriptions in the foregoing memory allocation method embodiment. Details are not described in this embodiment of this application again.

An embodiment of this application further provides a computer storage medium. The computer-readable storage medium stores instructions, and when the instructions are run on a computer or a processor, the computer or the processor is enabled to perform one or more steps in the method in any one of the foregoing embodiments. When implemented in a form of software functional units and sold or used as an independent product, the component modules of the apparatus may be stored in the computer-readable storage medium. Based on such an understanding, the technical solutions of this application essentially, or the part contributing to the conventional technology, or all or some of the technical solutions may be implemented in a form of a software product. The computer product is stored in the computer-readable storage medium.

The computer-readable storage medium may be an internal storage unit of the device in the foregoing embodiment, for example, a hard disk or memory. Alternatively, the computer-readable storage medium may be an external storage device of the device, for example, an equipped plug-in hard disk, a smart media card (Smart Media Card, SMC), a secure digital (Secure Digital, SD) card, or a flash card (Flash Card). Further, the computer-readable storage medium may alternatively include both the internal storage unit of the device and the external storage device. The computer-readable storage medium is configured to store the computer program and other programs and data that are required by the device. The computer-readable storage medium may be further configured to temporarily store data that has been output or is to be output.

A person of ordinary skill in the art may understand that all or some of the procedures of the methods in embodiments may be implemented by a computer program instructing related hardware. The computer program may be stored in a computer-readable storage medium. When the program runs, the procedures of the methods in embodiments may be performed. The foregoing storage medium includes any medium that can store program code, such as a ROM, a RAM, a magnetic disk, or an optical disc.

A sequence of the steps of the method in embodiments of this application may be adjusted, combined, or removed based on an actual requirement.

The modules in the apparatus in embodiments of this application may be combined, divided, and deleted based on an actual requirement.

It may be understood that a person of ordinary skill in the art may be aware that, units and algorithm steps in the examples described in embodiments disclosed with reference to embodiments of this application can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art can understand that functions described with reference to various illustrative logical blocks, modules, and algorithm steps disclosed in embodiments of this application may be implemented by hardware, software, firmware, or any combination thereof. If software is used for implementation, the functions described with reference to the illustrative logical blocks, modules, and steps may be stored in or transmitted over a computer-readable medium as one or more instructions or code and executed by a hardware-based processing unit. The computer-readable medium may include a computer-readable storage medium corresponding to a tangible medium, such as a data storage medium, or any communication medium that facilitates transmission of a computer program from one place to another (for example, according to a communication protocol). In this manner, the computer-readable medium may generally correspond to: (1) a non-transitory tangible computer-readable storage medium, or (2) a communication medium, for example, a signal or a carrier. The data storage medium may be any usable medium that can be accessed by one or more computers or one or more processors to retrieve instructions, code, and/or data structures for implementing the technologies described in this application. A computer program product may include a computer-readable medium.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A memory allocation method, comprising:

   obtaining a computation graph corresponding to a neural network, wherein the computation graph comprises N nodes and a directed edge that connects different nodes, a directed edge of the computation graph carries tensor data, the computation graph comprises M pieces of tensor data, and M is an integer greater than 1; and sequentially allocating memory space to the M pieces of tensor data based on a sorting result of the M pieces of tensor data, wherein if at least a part of the allocated memory space can be reused for one of the M pieces of tensor data, the at least the part of the memory space that can be reused for the tensor data is allocated to the tensor data, wherein the allocated memory space is memory space that has been allocated to the M pieces of tensor data before the tensor data, the sorting result indicates a sequence of allocating memory space to the M pieces of tensor data, the sorting result is related to information about each of the M pieces of tensor data, the information about each piece of tensor data indicates at least one of the following information: a constraint relationship corresponding to each piece of tensor data and a quantity of nodes to which each piece of tensor data flows, and the constraint relationship indicates a relationship between available memory space of one of the M pieces of tensor data and available memory space of other tensor data in the M pieces of tensor data.

2. The method according to claim 1, wherein if the allocated memory space cannot be reused for the tensor data, other memory space is allocated to the tensor data, wherein the other memory space is different from the allocated memory space.

3. The method according to claim 1 or 2, wherein the constraint relationship indicates at least one of the following relationships: a relationship between available memory space of one piece of tensor data and available memory space of another piece of tensor data is reusable, a relationship between available memory space of one piece of tensor data and available memory space of another piece of tensor data is non-reusable, and a relationship between available memory space of one piece of tensor data and available memory space of another piece of tensor data is non-reusable and continuous.

4. The method according to claim 3, wherein the constraint relationship is carried in a constraint relationship table, the constraint relationship table comprises identifiers of the M data tensors, and in the constraint relationship table, a first value is used to indicate that the relationship between the available memory space of the one piece of tensor data and the available memory space of the another piece of tensor data is reusable, a second value is used to indicate that the relationship between the available memory space of the one piece of tensor data and the available memory space of the another piece of tensor data is non-reusable, and a third value is used to indicate that the relationship between the available memory space of the one piece of tensor data and the available memory space of the another piece of tensor data is non-reusable and continuous.

5. The method according to any one of claims 1 to 4, wherein when all consumption nodes of first tensor data are upstream nodes of a production node of second tensor data, or when all consumption nodes of the second tensor data are downstream nodes of a production node of the first tensor data, memory space allocated to the second tensor data can be reused for the first tensor data; or when all the consumption nodes of the first tensor data are not the upstream nodes of the production node of the second tensor data, or when all the consumption nodes of the second tensor data are not the downstream nodes of the production node of the first tensor data, the memory space allocated to the second tensor data cannot be reused for the first tensor data, wherein the first tensor data and the second tensor data are any two of the M pieces of tensor data, the consumption node is a node to which tensor data flows, and the production node is a node from which tensor data flows.

6. The method according to any one of claims 1 to 5, wherein the computation graph comprises a plurality of computing subtasks, the computing subtask indicates a computing function by using a group of nodes and an edge related to the group of nodes, and an execution relationship between the plurality of computing subtasks is parallel; and the method further comprises:

   in one computing subtask, if there is no directed edge between two adjacent nodes, adding a directed edge between the two adjacent nodes, to update the computation graph, wherein each added directed edge carries corresponding tensor data, and the two adjacent nodes are two nodes that are adjacent in an execution sequence in the computing subtask; and
   obtaining the information about each piece of tensor data based on the updated computation graph.

7. The method according to claim 6, wherein the computation graph further comprises a first computing subtask and a second computing subtask that are in a serial execution relationship, and the first computing subtask is before the second computing subtask in an execution sequence; and the updating the computation graph further comprises: if there is no directed edge between a last node in the first computing subtask and a first node in the second computing subtask, adding a directed edge between the last node in the first computing subtask and the first node in the second computing subtask.

8. The method according to any one of claims 1 to 5, wherein in the computation graph, an identifier of a production node of tensor data is less than an identifier of a consumption node of the tensor data, and the production node of the tensor data and the consumption node of the tensor data are two adjacent nodes.

9. The method according to claim 8, wherein an identifier of each node in the computation graph is used to determine the information about each of the M pieces of tensor data.

10. The method according to claim 1, wherein the information about each piece of tensor data indicates the constraint relationship corresponding to each piece of tensor data, and the method further comprises:

    obtaining, based on the constraint relationship corresponding to each piece of tensor data, constraint quantities respectively corresponding to the M pieces of tensor data, wherein the constraint quantity is an amount of tensor data that is in other tensor data and for which same memory space cannot be reused with the tensor data; and
    sorting the M pieces of tensor data based on the constraint quantities respectively corresponding to the M pieces of tensor data, to obtain the sorting result of the M pieces of tensor data.

11. The method according to claim 1, wherein the information about each piece of tensor data indicates a quantity of nodes to which each piece of tensor data flows, and the method further comprises:
    sorting the M pieces of tensor data based on quantities of consumption nodes that respectively correspond to the M pieces of tensor data, to obtain the sorting result of the M pieces of tensor data.

12. The method according to claim 1, wherein the method further comprises:

sorting the M pieces of tensor data based on the information about each piece of tensor data by using a heuristic algorithm, to obtain the sorting result of the M pieces of tensor data within a preset time period.

13. The method according to claim 12, wherein the sorting result is a sorting result obtained after optimization, and a size of maximum memory that needs to be occupied by the neural network and that corresponds to the sorting result obtained after optimization is less than a size of maximum memory that needs to be occupied by the neural network and that is determined based on a sorting result existing before optimization.

14. A memory allocation method, comprising:

obtaining a computation graph corresponding to a neural network, wherein the computation graph comprises N nodes and a directed edge that connects different nodes, a directed edge of the computation graph carries tensor data, the computation graph comprises M pieces of tensor data, and M is an integer greater than 1; and sequentially allocating memory space to the M pieces of tensor data based on a constraint relationship corresponding to each piece of tensor data and an execution sequence of the M pieces of tensor data in the neural network, wherein if at least a part of the allocated memory space can be reused for one of the M pieces of tensor data, the at least the part of the memory space that can be reused for the tensor data is allocated to the tensor data, wherein the allocated memory space is memory space that has been allocated to the M pieces of tensor data before the tensor data, and the constraint relationship indicates a relationship between available memory space of one of the M pieces of tensor data and available memory space of other tensor data in the M pieces of tensor data.

15. The method according to claim 14, wherein if the allocated memory space cannot be reused for the tensor data, other memory space is allocated to the tensor data, wherein the other memory space is different from the allocated memory space.

16. A memory allocation apparatus, comprising:

a computation graph obtaining unit, configured to obtain a computation graph corresponding to a neural network, wherein the computation graph comprises N nodes and a directed edge that connects different nodes, a directed edge of the computation graph carries tensor data, the computation graph comprises M pieces of tensor data, and M is an integer greater than 1; and an allocation unit, configured to sequentially allocate memory space to the M pieces of tensor data based on a sorting result of the M pieces of tensor data, wherein if at least a part of the allocated memory space can be reused for one of the M pieces of tensor data, the at least the part of the memory space that can be reused for the tensor data is allocated to the tensor data, the allocated memory space is memory space that has been allocated to the M pieces of tensor data before the tensor data, the sorting result indicates a sequence of allocating memory space to the M pieces of tensor data, the sorting result is related to information about each of the M pieces of tensor data, the information about each piece of tensor data indicates at least one of the following information: a constraint relationship corresponding to each piece of tensor data and a quantity of nodes to which each piece of tensor data flows, and the constraint relationship indicates a relationship between available memory space of one of the M pieces of tensor data and available memory space of other tensor data in the M pieces of tensor data.

17. The apparatus according to claim 16, wherein the allocation unit is further configured to:
if the allocated memory space cannot be reused for the tensor data, allocate other memory space to the tensor data, wherein the other memory space is different from the allocated memory space.

18. The apparatus according to claim 16 or 17, wherein the constraint relationship indicates at least one of the following relationships: a relationship between available memory space of one piece of tensor data and available memory space of another piece of tensor data is reusable, a relationship between available memory space of one piece of tensor data and available memory space of another piece of tensor data is non-reusable, and a relationship between available memory space of one piece of tensor data and available memory space of another piece of tensor data is non-reusable and continuous.

19. The apparatus according to claim 18, wherein the constraint relationship is carried in a constraint relationship table, the constraint relationship table comprises identifiers of the M data tensors, and in the constraint relationship table, a first value is used to indicate that the relationship between the available memory space of the one piece of tensor data and the available memory space of the another piece of tensor data is reusable, a second value is used to indicate that the relationship between the available memory space of the one piece of tensor data and the available memory space of the another piece of tensor data is non-reusable, and a third value is used to indicate that the relationship between the available memory space of the one piece of tensor data and the available memory space of the another piece of tensor data is non-reusable and continuous.

20. The apparatus according to any one of claims 16 to 19, wherein when all consumption nodes of first tensor data are upstream nodes of a production node of second tensor data, or when all consumption nodes of the second tensor data are downstream nodes of a production node of the first tensor data, memory space allocated to the second tensor data can be reused for the first tensor data; or when all the consumption nodes of the first tensor data are not the upstream nodes of the production node of the second tensor data, or when all the consumption nodes of the second tensor data are not the downstream nodes of the production node of the first tensor data, the memory space allocated to the second tensor data cannot be reused for the first tensor data, wherein the first tensor data and the second tensor data are any two of the M pieces of tensor data, the consumption node is a node to which tensor data flows, and the production node is a node from which tensor data flows.

21. The apparatus according to any one of claims 16 to 20, wherein the computation graph comprises a plurality of computing subtasks, the computing subtask indicates a computing function by using a group of nodes and an edge related to the group of nodes, and an execution relationship between the plurality of computing subtasks is parallel; and the apparatus further comprises:

a computation graph updating unit, configured to: in one computing subtask, if there is no directed edge between two adjacent nodes, add a directed edge between the two adjacent nodes, to update the computation graph, wherein each added directed edge carries corresponding tensor data, and the two adjacent nodes are two nodes that are adjacent in an execution sequence in the computing subtask; and
an information obtaining unit, configured to obtain the information about each piece of tensor data based on the updated computation graph.

22. The apparatus according to claim 21, wherein the computation graph further comprises a first computing subtask and a second computing subtask that are in a serial execution relationship, and the first computing subtask is before the second computing subtask in an execution sequence; and the computation graph updating unit is further configured to:
if there is no directed edge between a last node in the first computing subtask and a first node in the second computing subtask, add a directed edge between the last node in the first computing subtask and the first node in the second computing subtask.

23. The apparatus according to any one of claims 16 to 20, wherein in the computation graph, an identifier of a production node of tensor data is less than an identifier of a consumption node of the tensor data, and the production node of the tensor data and the consumption node of the tensor data are two adjacent nodes.

24. The apparatus according to claim 23, wherein an identifier of each node in the computation graph is used to determine the information about each of the M pieces of tensor data.

25. The apparatus according to claim 16, wherein the information about each piece of tensor data indicates the constraint relationship corresponding to each piece of tensor data, and the apparatus further comprises:
a first sorting unit, configured to: obtain, based on the constraint relationship corresponding to each piece of tensor data, constraint quantities respectively corresponding to the M pieces of tensor data, wherein the constraint quantity is an amount of tensor data that is in other tensor data and for which same memory space cannot be reused with the tensor data; and sort the M pieces of tensor data based on the constraint quantities respectively corresponding to the M pieces of tensor data, to obtain the sorting result of the M pieces of tensor data.

26. The apparatus according to claim 16, wherein the information about each piece of tensor data indicates a quantity of nodes to which each piece of tensor data flows, and the apparatus further comprises:
a second sorting unit, configured to sort the M pieces of tensor data based on quantities of consumption nodes that respectively correspond to the M pieces of tensor data, to obtain the sorting result of the M pieces of tensor data.

27. The apparatus according to claim 16, wherein the apparatus further comprises:
a third sorting unit, configured to sort the M pieces of tensor data based on the information about each piece of tensor data by using a heuristic algorithm, to obtain the sorting result of the M pieces of tensor data within a preset time period.

28. The apparatus according to claim 27, wherein the sorting result is a sorting result obtained after optimization, and a size of maximum memory that needs to be occupied by the neural network and that corresponds to the sorting result obtained after optimization is less than a size of maximum memory that needs to be occupied by the neural network and that is determined based on a sorting result existing before optimization.

29. A memory allocation apparatus, comprising:

a computation graph obtaining unit, configured to obtain a computation graph corresponding to a neural network, wherein the computation graph comprises N nodes and a directed edge that connects different nodes, a directed edge of the computation graph carries tensor data, the computation graph comprises M pieces of tensor data, and M is an integer greater than 1; and

an allocation unit, configured to sequentially allocate memory space to the M pieces of tensor data based on a constraint relationship corresponding to each piece of tensor data and an execution sequence of the M pieces of tensor data in the neural network, wherein if at least a part of the allocated memory space can be reused for one of the M pieces of tensor data, the at least the part of the memory space that can be reused for the tensor data is allocated to the tensor data, wherein the allocated memory space is memory space that has been allocated to the M pieces of tensor data before the tensor data, and the constraint relationship indicates a relationship between available memory space of one of the M pieces of tensor data and available memory space of other tensor data in the M pieces of tensor data.

30. The apparatus according to claim 29, wherein the allocation unit is further configured to:
if the allocated memory space cannot be reused for the tensor data, allocate other memory space to the tensor data, wherein the other memory space is different from the allocated memory space.

31. A memory allocation apparatus, comprising a processor and a memory, wherein

the memory is configured to store a computer program, wherein the computer program comprises program instructions; and
the processor is configured to invoke the program instructions to perform the method according to any one of claims 1 to 15.

32. A computer-readable storage medium, wherein the computer-readable storage medium stores a computer program, the computer program comprises program instructions, and when the program instructions are executed by a processor, the processor is enabled to perform the method according to any one of claims 1 to 15.

FIG. 1a

FIG. 1b

| Computing subtask 0 | a | c | |
| Computing subtask 1 | | b | d/e | f | |
| Computing subtask 2 | | g | | h | |

FIG. 1c

| Computing subtask 0 | a | c | |
| Computing subtask 1 | | b | d/e | f | |
| Computing subtask 2 | | | | g | h |

FIG. 1d

Simulated operator execution sequence when memory is allocated to tensor data

FIG. 2a

Memory
planning space

| First memory space | Second memory space | Third memory space | Fourth memory space | Fifth memory space |
|---|---|---|---|---|
| t0, t5, and t8 | t1 | t2 and t6 | t3 and t7 | t4 |

FIG. 2b

Simulated operator execution sequence when
memory is allocated to tensor data

FIG. 2c

Memory allocation device

Artificial intelligence processor

| Hard disk | Memory | Processor CPU |
| --- | --- | --- |

| PE 0 | PE 1 | PE 2 | PE 3 | PE 4 | PE 5 | PE 6 | PE 7 |

Offline    Online

Bus

I/O
Online

Shared memory

**FIG. 3a**

Deep learning algorithm

Deep learning framework

Computing resource

Memory resource

Server or terminal device

**FIG. 3b**

Deep learning algorithm

Network model

Deep learning framework

NET class

Layer (Layer)

Blob

Task management

Memory management module

CPU

GPU

FIG. 3c

FIG. 3d

| Obtain a computation graph corresponding to a neural network | S401 |

| Sequentially allocate memory space to M pieces of tensor data based on a sorting result of the M pieces of tensor data | S402 |

FIG. 4a

Convolutional
layer 420

Fully connected
layer 430

Input
layer 410

Output
layer 440

Convolutional neural network 400

FIG. 4b

Tensor data 5:
possible
location record

| Possible location 1 | Possible location 2 | Possible location 3 | Possible location 4 |

| Tensor data 1 | | Tensor data 2 | | Tensor data 3 | Tensor data 4 | | Sorting result |

FIG. 4c

t1    t8    t7    t5    t0    t4

t2    t6

t3

FIG. 4d

FIG. 4e

FIG. 4f

First memory space

t000

t100    t200

Second memory space        Third memory space

FIG. 4g

| Obtain a computation graph corresponding to a neural network | S501 |

↓

| Sequentially allocate memory space to M pieces of tensor data based on a constraint relationship corresponding to each piece of tensor data and an execution sequence of the M pieces of tensor data in the neural network | S502 |

FIG. 5

60

600    602

Computation graph obtaining unit

Allocation unit

FIG. 6

701    705

Processor

Artificial intelligence processor

703

702

Memory

704

Communication interface

Memory allocation device

FIG. 7

## INTERNATIONAL SEARCH REPORT

| International application No. |
|---|
| **PCT/CN2021/119829** |

**A. CLASSIFICATION OF SUBJECT MATTER**

G06F 9/50(2006.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNABS; CNTXT; EPTXT; VEN; WOTXT; USTXT; CNKI; IEEE: 内存, 分配, 神经网络, 图, 边, 有向无环图, 复用, 算子, 计算, memory, allocation, neural network, graph, edge, directed acyclic graph, reuse, operator, compute

**C. DOCUMENTS CONSIDERED TO BE RELEVANT**

| Category* | Citation of document, with indication, where appropriate, of the relevant passages | Relevant to claim No. |
|---|---|---|
| X | CN 108829610 A (ZHEJIANG DAHUA TECHNOLOGY CO., LTD.) 16 November 2018 (2018-11-16) <br> description paragraphs 56-148, figure 1 - figure 5 | 1-32 |
| X | CN 111488221 A (BEIJING YILIU TECHNOLOGY CO., LTD.) 04 August 2020 (2020-08-04) <br> description, paragraphs 53-68 | 1-32 |
| X | CN 110597616 A (HUAWEI TECHNOLOGIES CO., LTD.) 20 December 2019 (2019-12-20) <br> description paragraphs 37-145 | 1-32 |
| A | CN 110490313 A (CAMBRICON TECHNOLOGIES CO., LTD.) 22 November 2019 (2019-11-22) <br> entire document | 1-32 |
| A | US 2018088996 A1 (APPLE INC.) 29 March 2018 (2018-03-29) <br> entire document | 1-32 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **11 November 2021** | **08 December 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

| | International application No. |
|---|---|
| | **PCT/CN2021/119829** |

| Patent document cited in search report | | | Publication date (day/month/year) | Patent family member(s) | | | Publication date (day/month/year) |
|---|---|---|---|---|---|---|---|
| CN | 108829610 | A | 16 November 2018 | CN | 108829610 | B | 04 August 2020 |
| CN | 111488221 | A | 04 August 2020 | CN | 111488221 | B | 09 October 2020 |
| CN | 110597616 | A | 20 December 2019 | WO | 2019237811 | A1 | 19 December 2019 |
| | | | | US | 2021089355 | A1 | 25 March 2021 |
| | | | | EP | 3786795 | A1 | 03 March 2021 |
| CN | 110490313 | A | 22 November 2019 | None | | | |
| US | 2018088996 | A1 | 29 March 2018 | None | | | |

Form PCT/ISA/210 (patent family annex) (January 2015)

**REFERENCES CITED IN THE DESCRIPTION**

**Patent documents cited in the description**

- CN 202011057095